# EUROPEAN PATENT SPECIFICATION

(11) **EP 2 106 080 B1**
(45) Date of publication and mention of the grant of the patent: **07.05.2014**
(21) Application number: 08715036.3
(22) Date of filing: 25.03.2008
(51) Int. Cl.: H04L 12/66, H04L 29/06, H04L 12/64, H04L 29/08

(54) **METHOD, SYSTEM AND DEVICE FOR SUPPLYING MULTI-SESSION SERVICE TO SUBSCRIBERS**
VERFAHREN, SYSTEM UND GERÄT ZUM BEREITSTELLEN VON MEHRFACHSITZUNGSDIENST AN NUTZER
PROCÉDÉ, SYSTÈME ET DISPOSITIF POUR FOURNIR UN SERVICE MULTI-SESSION À DES ABONNÉS

(30) Priority: 26.03.2007 CN 200710088846; 31.05.2007 CN 200710105902
(43) Date of publication of application: 30.09.2009
(73) Proprietor: Huawei Technologies Co., Ltd., Longgang District, Shenzhen Guangdong 518129 (CN)
(72) Inventor: ZHU, Dongming, Shenzhen Guangdong 518129 (CN); ZHANG, Hengliang, Shenzhen Guangdong 518129 (CN); YE, Songhai, Shenzhen Guangdong 518129 (CN); DING, Chunyan, Shenzhen Guangdong 518129 (CN)
(74) Representative: Isarpatent
(86) International application number: PCT/CN2008/000584
(87) International publication number: WO 2008/116386

(56) References cited:
- EP-A1- 1 465 386
- CN-A- 1 890 931
- US-A1- 2004 190 498
- US-A1- 2006 209 805

## Description

### FIELD OF THE INVENTION

The present invention relates to the communication field, and in particular, to a method, a system, an Application Server (AS), and a Media Gateway Control Function (MGCF) for providing multi-session services for users.

### BACKGROUND

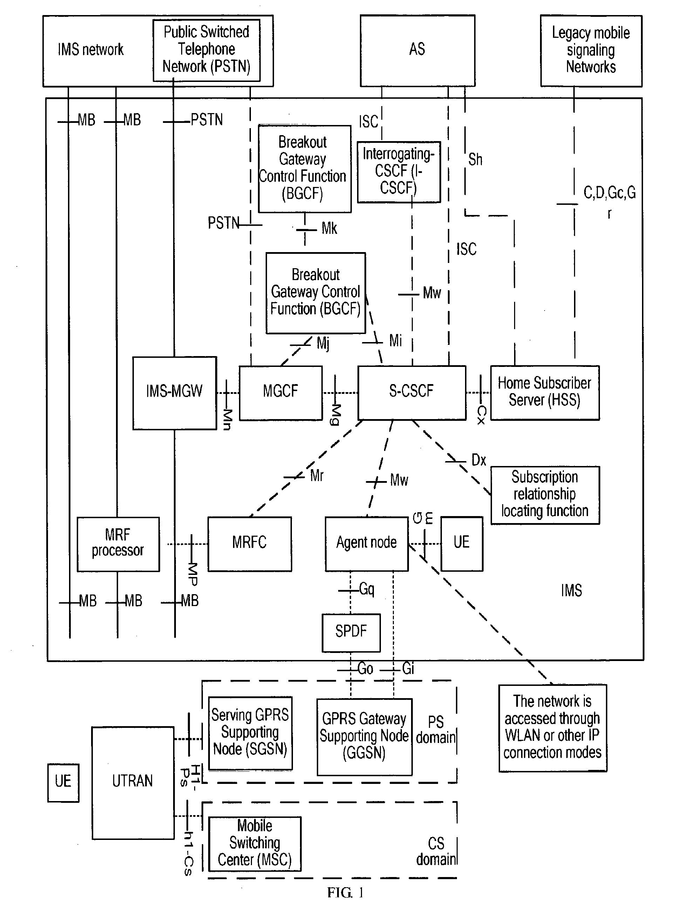

IP Multimedia Subsystem (IMS) is a subsystem overlaid on an existing Packet Switched (PS) domain in a mobile switching network. FIG. 1 shows IMS network system architecture. As shown in FIG. 1, the IMS uses the PS domain as a bearer channel of its upper-layer control signaling and media transmission. By using a Session Initiation Protocol (SIP) as a service control protocol, the IMS draws upon the merits of the SIP such as simplicity, extensibility, and convenience of combining media, separates the service control from the bearer control, and provides diversified multimedia services.

The AS is adapted to provide various service logic control functions.

Media Gateway Control Function/IMS Media Gateway (MGCF/IM-MGW) is adapted to implement interworking with a Circuit Switched (CS) network.

The Multimedia Resource Function (MRF) is adapted to provide the media processing function in the basic and enhanced services, the conference function, conversion between different coding and decoding algorithms, the communication function, and the management and maintenance function.

In the IMS, the UE accesses the IMS through a Proxy-Call Session Control Function (P-CSCF), and Serving-CSCF (S-CSCF) is responsible for controlling the triggering of sessions and services and interacting with the AS about service control.

The multi-session service in mobile communication falls into the following types:
Call Hold (HOLD): A UE which subscribes to the Call Hold service can interrupt an underway conversation temporarily while retaining the session connection, and can resume the session when necessary. After the conversation is interrupted, the traffic channel is still available to the UE for initiating other calls or resuming the session. The Call Hold service holds the session in the conversation process of the UE to keep the peer end from releasing the session. In the holding process, however, the local side does not receive media streams from the peer end any more.
Call Waiting (CW): When a UE which subscribes to the CW service is under a conversation, if another party makes a call (a second session) to the UE, the UE obtains a notification about the incoming call and may choose to answer, reject or ignore the call. The network returns a response to the peer end which initiates the second session, notifying the peer end of the second session to hold on and wait for answering. Within a specific time, the UE can still connect up the second session.
Explicit Call Transfer (ECT): When a UE which subscribes to the ECT service (for example, UE A) is under two sessions (one session is from or to UE B, and the other session is from or to UE C), UE A may use the two connections to connect up a conversion between UE B and UE C while disconnecting UE B from UE A and disconnecting UE C from UE A.
MultiParty Service (MPTY): A UE which subscribes to a MPTY service can make a call between multiple parties, for example, a conference between party A, party B, and party C.

During the transition process of a network to an IMS network, the CS network generally coexists with the IMS network. In this case, the service provider hopes that a control point in the network exercises centralized control over the services in the two domains in order to reduce costs of deployment and management and provide consistent service experience. Generally, the centralized control point is an AS located in the IMS network. That is, when the UE accesses the session through a CS network, the service is still provided for the UE in the IMS network.

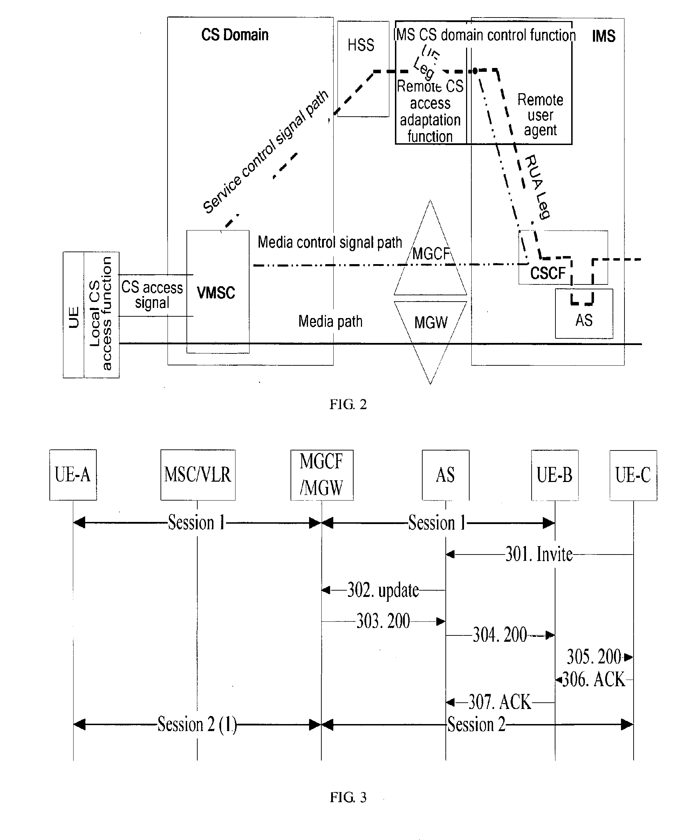

As shown in FIG. 2, the existing centralized service control architecture works in the following way:

When the UE initiates or receives a call in the CS network, the call is controlled to be routed to the home IMS network, and an IMS network service control entity is inserted into the call path. In this way, services can be provided for the UE in the IMS domain. Meanwhile, in order to implement interaction between the UE and the IMS network service control entity in the service control process, an IMS CS Control Function (ICCF) is added in the IMS network. The ICCF entity implements adaptation control for the UE to access the IMS network through the CS domain (namely, conversion from the CS domain signaling of the UE to the SIP signaling), and accesses the IMS in place of the UE. The signaling between the UE and the ICCF may be Unstructured Supplementary Service Data (USSD), Short Message Service (SMS), or Dual Tone Multiple Frequency (DTMF).

Currently, multi-session services are provided in the following way for an IMS user who accesses the network through the CS domain:

When a UE uses the service in the IMS domain and the AS finds that the UE wants to connect up a second session, the AS connects the second session to the port of the first session to reuse the bearer of the first session.

FIG. 3 is a flowchart of a first solution to providing a multi-session service for a CS user who accesses the IMS domain. The flow includes the following steps:

Step 301: When a session exists between UE-A and UE-B, the AS finds that a new call is initiated from UE-C to UE-A.

Steps 302-303: The port ID of UE-C is notified to the MGW.

Steps 304-307: A call response is returned to UE-C. The port ID of the MGW is notified to UE-C, and the MGW is connected with the UE-C.

To sum up, the technical solution in the prior art is defective in that: The second session is connected to the port of the first session and the bearer of the first session is reused. That is, the port at the MGW of the first session is connected to the UE-C. In this way, when the UE-B sends a message to probe the state of the port at the MGW, the MGW makes no response any longer. Consequently, the UE-B releases the session, and it is impossible to hold on the first session and impossible to implement the multi-session service. EP 1465386 A1 describes fast network SIP/SDP procedures for conference operation with optimization of network resources. US 2004/190498 A1 describes a method, system and Gateway Device for enabling interworking between IP and CS networks.

### SUMMARY

A method, a system, and an AS for providing multi-session services for users are disclosed in an embodiment of the present invention to overcome the defect in the prior art, namely, to overcome the defect that it is impossible to provide multi-session services for users under centralized control of the IMS domain when a new session is initiated to a session user who accesses the network from the CS domain.

A method for providing multi-session services for users is disclosed in an embodiment of the present invention. The first UE which accesses the network from the CS domain sets up a first session with the second UE through the first bearer channel, the first session port, and the second session port. The first bearer channel is allocated to the first UE for use between the CS domain and the IMS domain in the first session. The first session port is allocated to the first bearer channel for use in the IMS domain. The second session port is allocated to the second UE for use in the IMS domain in the first session. The method includes the following steps:
sending a session setup request from the third UE to the first UE or from the first UE to the third UE to set up a second session;
holding on the first session connection, and allocating the third session port in the IMS domain; and
connecting the bearer channels of the first UE, the second UE, and the third UE through the first bearer channel, the first session port, the second session port, and the third session port according to the operation instruction selected by the first UE.

A system for providing multi-session services for users is disclosed in an embodiment of the present invention. The system includes a first UE and a second UE in the first session, where: the first UE which accesses the network from the CS domain sets up the first session with the second UE through the first bearer channel, the first session port, and the second session port; the first bearer channel is allocated to the first UE for use between the CS domain and the IMS domain in the first session; the first session port is allocated to the first bearer channel for use in the IMS domain; and the second session port is allocated to the second UE for use in the IMS domain in the first session. The system further includes:
a third UE, adapted to set up the second session with the first UE;
a port allocating module, adapted to allocate the third session port in the IMS domain; and
a session connecting module, adapted to connect bearer channels of the first UE, the second UE, and the third UE through the first bearer channel, the first session port, the second session port, and the third session port according to the operation instruction selected by the first UE.

An AS for providing multi-session services for users is disclosed in an embodiment of the present invention. The AS is adapted to enable the first UE which accesses the network from the CS domain to set up the first session with the second UE through the first bearer channel, the first session port, and the second session port when the first UE and the second UE are in the first session, where: the first bearer channel is allocated to the first UE for use between the CS domain and the IMS domain in the first session; the first session port is allocated to the first bearer channel for use in the IMS domain; and the second session port is allocated to the second UE for use in the IMS domain in the first session. The AS includes:
a port allocating module, adapted to allocate the third session port in the IMS domain when a session setup request is sent from the third UE to the first UE or from the first UE to the third UE to set up the second session; and
a session connecting module, adapted to connect bearer channels of the first UE, the second UE, and the third UE through the first bearer channel, the first session port, the second session port, and the third session port according to the operation instruction selected by the first UE.

The embodiments of the present invention bring at least the following benefits: When a new user initiates a session with a user who accesses the network through a CS domain, a session port is allocated to the new user in the IMS domain, and the session connection is set up through the connection between the session ports of the IMS domain, thus implementing centralized control of the services. Meanwhile, at the time of setting up a session, the bearer channel and the session port between the CS domain and the IMS domain allocated to the user and used in the old session are still in use, thus preventing deficiency of resources caused by occupation of two session ports in the CS domain. Therefore, the embodiments of the present invention use network media resources to provide multi-session services under centralized control of the IMS.

### BRIEF DESCRIPTION OF THE DRAWINGS

FIG. 1 shows IMS architecture in the prior art;
FIG. 2 shows IMS Centralized Services (ICS) architecture in the prior art;
FIG. 3 is a flowchart of a second solution to providing a multi-session service for a CS user who accesses the IMS domain in the prior art;
FIG. 4 is a flowchart of providing multi-session services for users according to an embodiment of the present invention;
FIG. 5 shows a structure of a system for providing multi-session services for users according to an embodiment of the present invention;
FIG. 6 shows a structure of an AS for providing multi-session services for users according to an embodiment of the present invention;
FIG. 7 shows a structure of an MGCF according to an embodiment of the present invention;
FIG. 8 is a flowchart of connecting up a second session initiated by a third UE when the first session connection is held between the first UE and the second UE at the MRF according to an embodiment of the present invention;
FIG. 9 is a flowchart of connecting up a second session initiated to a third UE when the first session connection is held between the first UE and the second UE at the MRF according to an embodiment of the present invention;
FIG. 10 is a flowchart of connecting up a second session initiated to a third UE at the MGW when the first session connection is held between the first UE and the second UE according to an embodiment of the present invention;
FIG. 11 is a flowchart of initiating a second session to a third UE to set up a call after the first UE holds the first session at the MGW in an embodiment of the present invention;
FIG. 12 is a flowchart of the first UE executing an ECT operation instruction when the first session connection is held between the first UE and the second UE at the MRF according to an embodiment of the present invention;
FIG. 13 is a flowchart of executing an operation instruction of MPTY between the first UE, the second UE and the third UE at the MRF according to an embodiment of the present invention;
FIG. 14 is a flowchart of executing an operation instruction of ECT between the first UE, the second UE and the third UE at the MGW through an audio mixing function according to an embodiment of the present invention;
FIG. 15 is a flowchart of executing an operation instruction of MPTY between the first UE, the second UE and the third UE at the MGW according to an embodiment of the present invention;
FIG. 16 is a flowchart of executing an operation instruction of MPTY between the first UE, the second UE and the third UE through conference resources according to an embodiment of the present invention;
FIG. 17 is a flowchart of executing an operation instruction of ECT between the first UE, the second UE and the third UE according to an embodiment of the present invention;
FIG. 18 is a flowchart of executing an operation instruction of CW between the first UE, the second UE and the third UE according to an embodiment of the present invention;
FIG. 19 is a flowchart of implementing CW by connecting a session to an MRF according to an embodiment of the present invention;
FIG. 20 is a flowchart of connecting up a second session when the second session undergoes CW according to an embodiment of the present invention;
FIG. 21 is a flowchart of executing an operation instruction of alternating a HOLD operation with an activation operation between the first UE, the second UE and the third UE according to an embodiment of the present invention; and
FIG. 22 illustrates a call termination process of a first UE in which the first UE needs to connect up a second session according to an embodiment of the present invention.

### DETAILED DESCRIPTION

The embodiments of the present invention are detailed below by reference to accompanying drawings.

IMS is a term used by the 3^{rd} Generation Partnership Project (3GPP) and the Tispan. In the 3GPP2, the IMS is called "Multimedia Domain (MMD)". The MMD is similar to the IMS with respect to the structure and the working mechanism. The embodiment of the method for providing multi-session services for users in an IMS is further expounded below. Because the IMS is similar to the MMD in principles, the embodiment is also applicable to the MMD.

As described above, at the time of providing multi-session services for users, service logic control may be provided through an AS. The following embodiment supposes that the control is exercised by an AS, but it is apparent that in practice, any other devices capable of providing service logic control in the IMS such as an enhanced Mobile Switching Center (MSC) can implement multi-session services.

In the following embodiment, it is assumed that the service is implemented by an MRF and an MGW. It is easily understandable that, in practice, the service can be implemented by any device capable of setting up and allocating a session port for a session and setting up a bearer channel to implement the session in the IMS domain.

In the following embodiment, it is assumed that the operation is executed between a first UE, a second, and a third UE. It is easily understandable that, in practice, the multi-session service may be performed between more than three users.

In the following embodiment, it is assumed that a new session is set up between the first UE and the third UE. It is easily understandable that, when the first UE is connected with the second UE in the CS domain and connected with the third UE in the PS domain, the session with the third UE in the PS domain may be handed over to the CS domain by initiating a new session from the first UE to the third UE, as described in the following embodiment.

In the following embodiment, the first UE that accesses the network from the CS domain sets up the first session with the second UE through the first bearer channel, the first session port, and the second session port; the first session port is allocated to the first bearer channel for use in the IMS domain, the second session port is allocated to the second UE for use in the IMS domain in the first session, and the third session port is allocated in IMS domain; the first bearer channel is allocated to the first UE for use between the CS domain and the IMS domain in the first session; the second bearer channel is allocated for use between the third session port and the first session port; and the third bearer channel is allocated for use between the third session port and the second session port. After the session port is determined, it is easy to allocate a bearer channel between the session ports. Therefore, the linchpin is how to determine the session port that needs to be connected. The following embodiment primarily expounds how to determine the session port. After the session port is determined, the embodiment does not emphasize the corresponding bearer channel.

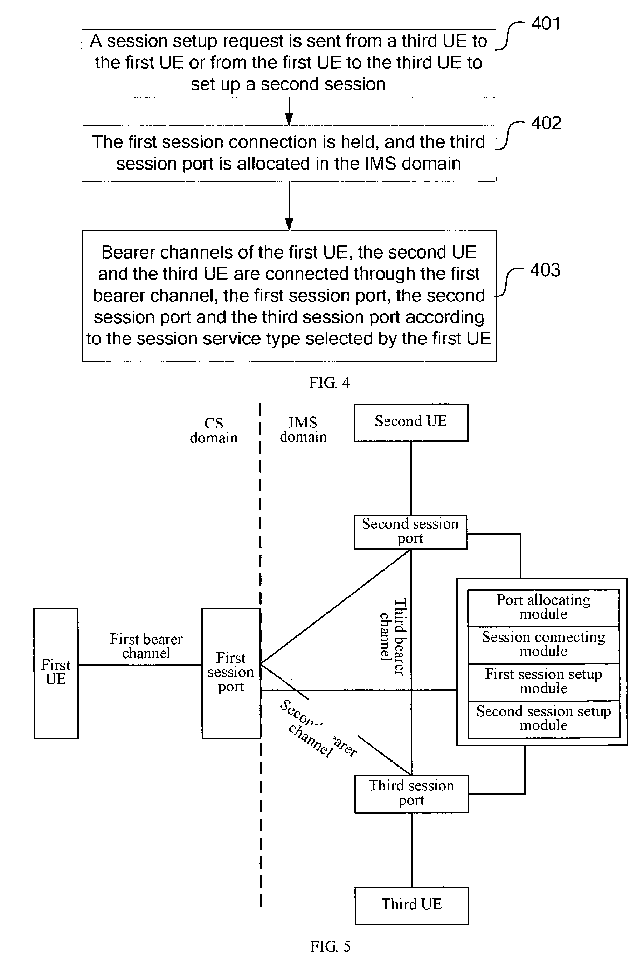

FIG. 4 is a flowchart of providing multi-session services for users. In the method embodiment of providing multi-session services for users, the first UE which accesses the network from the CS domain sets up a first session with the second UE through the first bearer channel, the first session port, and the second session port. The first bearer channel is allocated to the first UE for use between the CS domain and the IMS domain in the first session. The first session port is allocated to the first bearer channel for use in the IMS domain. The second session port is allocated to the second UE for use in the IMS domain in the first session. As shown in FIG. 4, the method includes the following steps:

Step 401: A session setup request is sent from the third UE to the first UE or from the first UE to the third UE to set up a second session.

Step 402: The first session connection is held, and the third session port is allocated in the IMS domain.

Step 403: The bearer channels of the first UE, the second UE, and the third UE are connected through the first bearer channel, the first session port, the second session port, and the third session port according to the operation instruction selected by the first UE.

The steps are elaborated below.

In step 401, the second session initiated between the third UE and the first UE may be a new call directed to the first UE and originated by the third UE, or may be a new session initiated by the first UE to the third UE. The UE may initiate a session by:
sending a USSD message to notify that the UE is initiating a session;
sending a SIP message (for example, Message, Info, Notify) to notify that the UE is initiating a session;
sending an SMS message to notify that the UE is initiating a session; or
sending a DTMF signal to notify that the UE is initiating a session.

When a call directed to the UE is received, the first UE may also be notified in one of the foregoing modes.

In the process of allocating the third session port in step 402, the session port may be allocated on the MRF in the IMS domain, or allocated on the MGW through the MGCF in the IMS domain.

In the process of preparing session port resources for setting up a multi-session service, if the port is requested from the MGW, an independent port may be requested from the MGW. Alternatively, an audio mixing resource port may be requested from the MGW; and, if the requested session port is an audio mixing resource port, the port is connected to an audio mixing site. That is, the session ports previously used for the first session and the second session are added into the audio mixing site.

At the time of requesting a session port from the MRF, an independent port may be requested. In practice, if the previous first session has not been anchored to the MRF, it is still necessary to request an independent first session port for the previous first session and the MGW connected to the first UE. At the time of requesting a session port at the MRF, an anchored audio mixing resource port may be requested from the MRF, and this port may be connected to the audio mixing site. If the previous first session has not been anchored to the MRF, it is still necessary to request an anchored audio mixing resource port from the MRF for the previous first session and the MGW connected to the first UE, and add the port into the foregoing audio mixing site.

The requested session port resources may be used in the following way:

If an independent port (a third session port) is requested, the first UE or the second UE is connected to the third session port within the MGW or the MRF, and the third session port is connected to the third UE that intends to set up a session. If an audio mixing resource port added into the audio mixing site is requested, the third session port is connected to the third UE that intends to set up a session.

In practice, if the port resource is requested from the MRF and the previous first session is not anchored to the MRF, it is still necessary to connect the session port previously used by the first UE on the MGW to the MRF, and connect the session port previously used by the second UE in the previous session to the MRF.

Described above is a scenario in which both sessions are connected to the MRF or the MGW. In another scenario, one session is connected to the MRF and the other session is connected to the MGW. In this scenario, it is only necessary to request the third session port from the MRF, and not necessary to perform the foregoing operations between the ports.

For step 403, the operation instructions include: HOLD, CW, ECT, and MPTY. In practice, a decision is made about whether to set up the first session and the second session through the connection between the session port and the bearer channel according to the operation instruction selected by the first UE. The specific operations are as follows.

If the operation instruction selected by the first UE is to connect up the second session, the first session is held through the connection between the first bearer channel, the first session port and the second session port, and the second session is connected up through the connection between the first bearer channel, the first session port and the second bearer channel; or, the first session is held through the connection between the third session port and the second UE, and the second session is connected up through the connection between the first bearer channel, the first session port, the second session port and the third UE.

If the operation instruction selected by the first UE is to let the second session undergo CW, the first session is held through the connection between the first bearer channel, the first session port and the second session port, and the third UE is notified to wait for call connection.

If the operation instruction selected by the first UE is to disconnect the second session, the first session is held through the connection between the first bearer channel, the first session port, and the second session port, and the second session is released.

That is, if the session is initiated from the third UE to the first UE, it is appropriate that the third UE at the peer end of the new second session is in the CW state; it is appropriate that the first UE chooses whether to answer, and terminates the second session if the first UE chooses not to answer, and further, releases the requested resources; it is appropriate that the first UE holds the first session already in the active state, and then answers the second session.

If the session is initiated from the first UE to the third UE, it is appropriate that the first UE holds the first session already in the active state, and then initiates a call to the third UE.

Further, when the type of the service being handled is ECT or MPTY, it is necessary to decide whether to set up a third bearer channel in the IMS domain through the connection between the second session port and the third session port according to the operation instruction selected by the first UE. Through the third bearer channel, the session between the second UE and the third UE is connected.

If the operation instruction selected by the first UE is ECT, the first session port is disconnected, and the third session is connected through the connection between the second session port, the third bearer channel, and the third session port.

If the operation instruction selected by the first UE is MPTY, the MPTY service is performed through the connection between the first bearer channel, the first session port, the second session port, and the third session port.

In practice, when the first UE decides to perform service ECT, if an independent port is requested, it is only necessary to connect the second session port (which is connected with the second UE) to the third session port (which is connected with the third UE) inside the MRF or the MGW, and release the first session port connected with the CS side of the first UE. In this case, the first UE is disconnected from the session, and a third session is set up between the second UE and the third UE.

If the audio mixing resource port already added into an audio mixing port is requested, it is only necessary to activate the existing session port in the inactive state and release the first session port connected with the CS site of the first UE.

In practice, when the first UE decides to handle the service MPTY, it is necessary to request a third session port on the audio mixing resources, and add the first session port and the second session port into the audio mixing resources.

Described above is a scenario in which two existing sessions are connected to the MGW or the MRF. If one session is connected to the MRF and the other is connected to the MGW, when the operation instruction selected by the first UE is ECT, it is only necessary to request a new port from the MRF for the session connected at the MGW. The new port requested from the MRF is connected with the third session port.

When the first UE decides to perform MPTY, if an independent port is requested, it is necessary to request audio mixing site resources from the MRF or the MGW, to activate all sessions, and to add them into the audio mixing site.

If the port already added into the audio mixing site is requested, it is only necessary to activate all sessions.

If the operation instruction selected by the first UE is MPTY, the session may also be performed through the connection between first UE together with conference resources, the second UE together with conference resources, and the third UE together with conference resources, without the need of performing the foregoing operations between the ports.

A system for providing multi-session services for users is disclosed in an embodiment of the present invention, as detailed below.

FIG. 5 shows a structure of a system for providing multi-session services for users. As shown in FIG. 5, the system includes: a first UE, a second UE, a third UE, an IMS device, a port allocating module, and a session connecting module.

The first UE and the second UE are in the first session, where:
the first UE which accesses the network from the CS domain sets up the first session with the second UE through the first bearer channel, the first session port, and the second session port;
the first bearer channel is allocated to the first UE for use between the CS domain and the IMS domain in the first session;
the first session port is allocated to the first bearer channel for use in the IMS domain; and
the second session port is allocated to the second UE for use in the IMS domain in the first session.

A session setup request is sent from the third UE to the first UE or from the first UE to the third UE to set up a second session.

The port allocating module allocates the third session port in the IMS domain.

The session connecting module connects the bearer channels of the first UE, the second UE, and the third UE through the first bearer channel, the first session port, the second session port, and the third session port according to the operation instruction selected by the first UE.

The system may further include a first session setup module, which is adapted to decide to set up the first session and the second session through the connection between the session port and the bearer channel according to the operation instruction selected by the first UE.

The first session setup module may include:
a first connecting unit, adapted to: hold the first session through the connection between the first bearer channel, the first session port and the second session port, and connect up the second session through the connection between the first bearer channel, the first session port and the second bearer channel; or hold the first session through the connection between the third session port and the second UE, and connect up the second session through the connection between the first bearer channel, the first session port, the second session port and the third UE, if the operation instruction selected by the first UE is to connect up the second session; and
a second connecting unit, adapted to: hold the first session through the connection between the first bearer channel, the first session port and the second session port, and notify the third UE to wait for call connection, if the operation instruction selected by the first UE is to let the second session undergo CW.

The system may further include a second session setup module, which is adapted to: decide to set up the third bearer channel through the connection between the second session port and the third session port according to the operation instruction selected by the first UE, and perform a session between the second UE and the third UE through the third bearer channel.

The second session setup module may include:
a fourth connecting unit, adapted to: disconnect the first UE or the first session port and perform a third session between the second UE and the third UE through the connection between the second session port, the third bearer channel and the third session port; or allocate a fourth session port which has the same resource as that of the third session port and is connected with the second UE, disconnect the first UE or the first session port, and perform a third session between the second UE and the third UE through the connection between the third session port and the fourth session port, if the operation instruction selected by the first UE is ECT; and
a fifth connecting unit, adapted to: perform a session between the first UE, the second UE, and the third UE through the connection between the first bearer channel, the first session port, the second session port and the third session port; or perform a multi-party conversation through the connection between first UE together with conference resources, the second UE together with conference resources, and the third UE together with conference resources, if the operation instruction selected by the first UE is to connect an MPTY.

In practice, the port allocating module is connected with the MRF, and allocates the third session port on the MRF; or, the port allocating module is connected with the MGCF, and allocates the third session port on the MGW through the MGCF.

The session port may be an audio mixing resource port or an independent resource port. When the session port is an audio mixing resource port, it is only necessary to add the session port into the audio mixing site directly.

An AS for providing multi-session services for users is disclosed in an embodiment of the present invention, as detailed below.

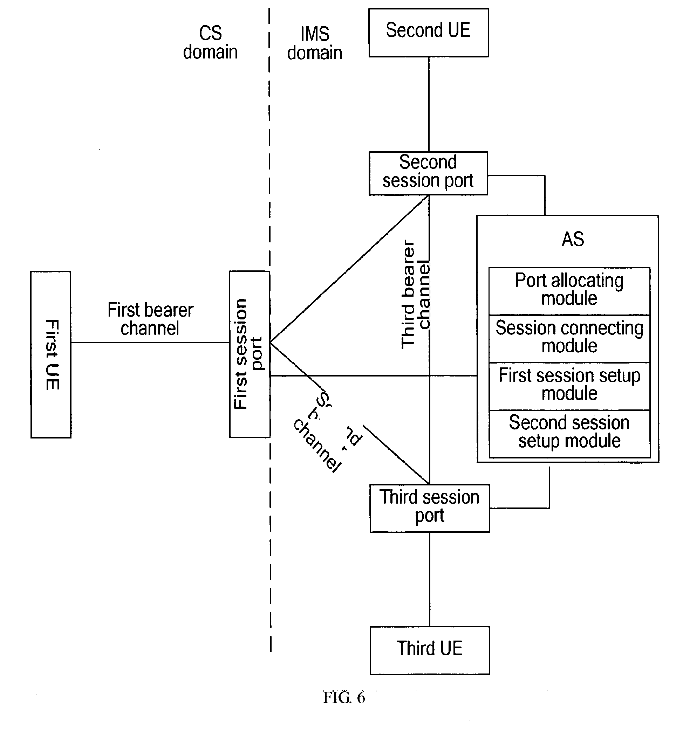

FIG. 6 shows a structure of an AS for providing multi-session services for users. As shown in FIG. 6, the AS enables the first UE which accesses the network from the CS domain to set up the first session with the second UE through the first bearer channel, the first session port, and the second session port when the first UE and the second UE are in the first session, where: the first bearer channel is allocated to the first UE for use between the CS domain and the IMS domain in the first session; the first session port is allocated to the first bearer channel for use in the IMS domain; and the second session port is allocated to the second UE for use in the IMS domain in the first session. The AS includes:
a port allocating module, adapted to allocate the third session port in the IMS domain when a session setup request is sent from the third UE to the first UE or from the first UE to the third UE to set up the second session; and
a session connecting module, adapted to connect bearer channels of the first UE, the second UE, and the third UE through the first bearer channel, the first session port, the second session port, and the third session port according to the operation instruction selected by the first UE.

The AS may further include a first session setup module, which is adapted to decide to set up the first session and the second session through the connection between the session port and the bearer channel according to the operation instruction selected by the first UE.

The first session setup module may include:
a first connecting unit, adapted to: hold the first session through the connection between the first bearer channel, the first session port and the second session port, and connect up the second session through the connection between the first bearer channel, the first session port and the second bearer channel; or hold the first session through the connection between the third session port and the second UE, and connect up the second session through the connection between the first bearer channel, the first session port, the second session port and the third UE, if the operation instruction selected by the first UE is to connect up the second session; and
a second connecting unit, adapted to: hold the first session through the connection between the first bearer channel, the first session port and the second session port, and notify the third UE to wait for call connection, if the operation instruction selected by the first UE is to let the second session undergo CW.

The AS may further include a second session setup module, which is adapted to: decide to set up the third bearer channel through the connection between the second session port and the third session port according to the operation instruction selected by the first UE, and perform a session between the second UE and the third UE through the third bearer channel.

The second session setup module may include:
a fourth connecting unit, adapted to: disconnect the first UE or the first session port, and perform a third session between the second UE and the third UE through the connection between the second session port, the third bearer channel and the third session port; or allocate a fourth session port which has the same resource as that of the third session port and is connected with the second UE, disconnect the first UE or the first session port, and perform a third session between the second UE and the third UE through the connection between the third session port and the fourth session port, if the operation instruction selected by the first UE is ECT; and
a fifth connecting unit, adapted to: perform a session between the first UE, the second UE, and the third UE through the connection between the first bearer channel, the first session port, the second session port and the third session port; or perform a multi-party conversation through the connection between first UE together with conference resources, the second UE together with conference resources and the third UE together with conference resources, if the operation instruction selected by the first UE is to connect an MPTY.

In practice, the port allocating module is connected with the MRF, and allocates the third session port on the MRF; or, the port allocating module is connected with the MGCF, and allocates the third session port on the MGW through the MGCF.

An MGCF is disclosed in an embodiment of the present invention, as detailed below.

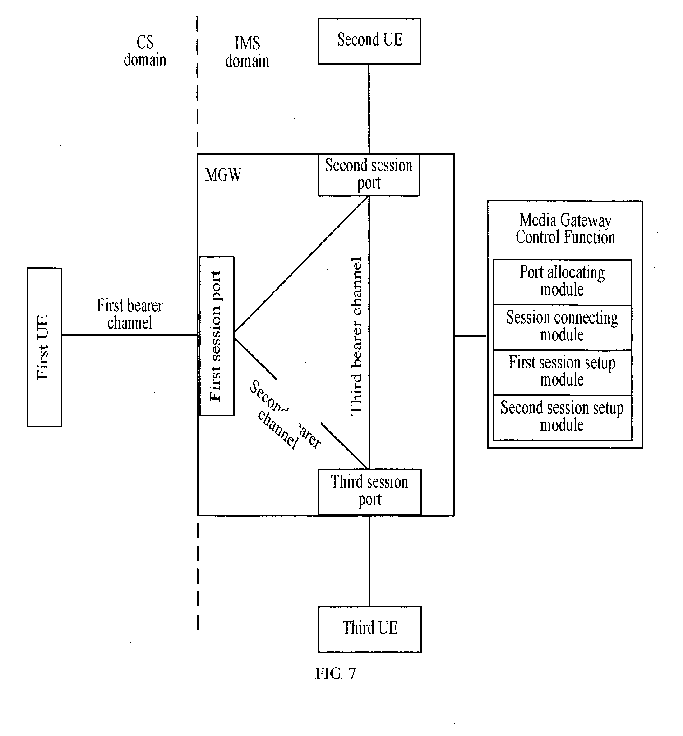

FIG. 7 shows a structure of an MGCF. As shown in FIG. 7, the MGCF enables the first UE which accesses the network from the CS domain to set up the first session with the second UE through the first bearer channel, the first session port, and the second session port when the first UE and the second UE are in the first session, where: the first bearer channel is allocated to the first UE for use between the CS domain and the IMS domain in the first session; the first session port is allocated to the first bearer channel for use in the IMS domain; and the second session port is allocated to the second UE for use in the IMS domain in the first session. The MGCF includes:
a port allocating module, adapted to allocate the third session port for the third UE on the MGW in the IMS domain when a session setup request is sent from the third UE to the first UE or from the first UE to the third UE to set up the second session; and
a session connecting module, adapted to connect bearer channels of the first UE, the second UE, and the third UE through the first bearer channel, the first session port, the second session port, and the third session port according to the operation instruction selected by the first UE.

The MGCF may further include a first session setup module, which is adapted to decide to set up the first session and the second session on the MGW through the connection between the session port and the bearer channel according to the operation instruction selected by the first UE.

The first session setup module may include:
a first connecting unit, adapted to: hold the first session through the connection between the first bearer channel, the first session port and the second session port, and connect up the second session through the connection between the first bearer channel, the first session port and the second bearer channel; or hold the first session through the connection between the third session port and the second UE, and connect up the second session through the connection between the first bearer channel, the first session port and the second session port, if the operation instruction selected by the first UE is to connect up the second session; and
a second connecting unit, adapted to: hold the first session through the connection between the first bearer channel, the first session port and the second session port, and notify the third UE to wait for call connection, if the operation instruction selected by the first UE is to let the second session undergo CW.

The MGCF may further include a second session setup module, which is adapted to: decide to set up the third bearer channel through the connection between the second session port and the third session port according to the operation instruction selected by the first UE, and perform a session between the second UE and the third UE through the third bearer channel.

The second session setup module may include:
a fourth connecting unit, adapted to: disconnect the first UE or the first session port, and perform a third session between the second UE and the third UE through the connection between the second session port, the third bearer channel and the third session port; or allocate a fourth session port which has the same resource as that of the third session port and is connected with the second UE, disconnect the first UE or the first session port, and perform a third session between the second UE and the third UE through the connection between the third session port and the fourth session port, if the operation instruction selected by the first UE is ECT; and
a fifth connecting unit, adapted to: perform a session between the first UE, the second UE, and the third UE through the connection between the first bearer channel, the first session port, the second session port and the third session port; or perform a session through the connection between first UE together with conference resources, the second UE together with conference resources and the third UE together with conference resources after requesting the conference resources, if the operation instruction selected by the first UE is to connect an MPTY.

Further details are given below through embodiments.

### Embodiment 1

This embodiment describes a scenario in which a second session call initiated by the third UE is received when the first session connection is held between the first UE and the second UE, the first UE connects up the second session, and the session connection converges at the MRF.

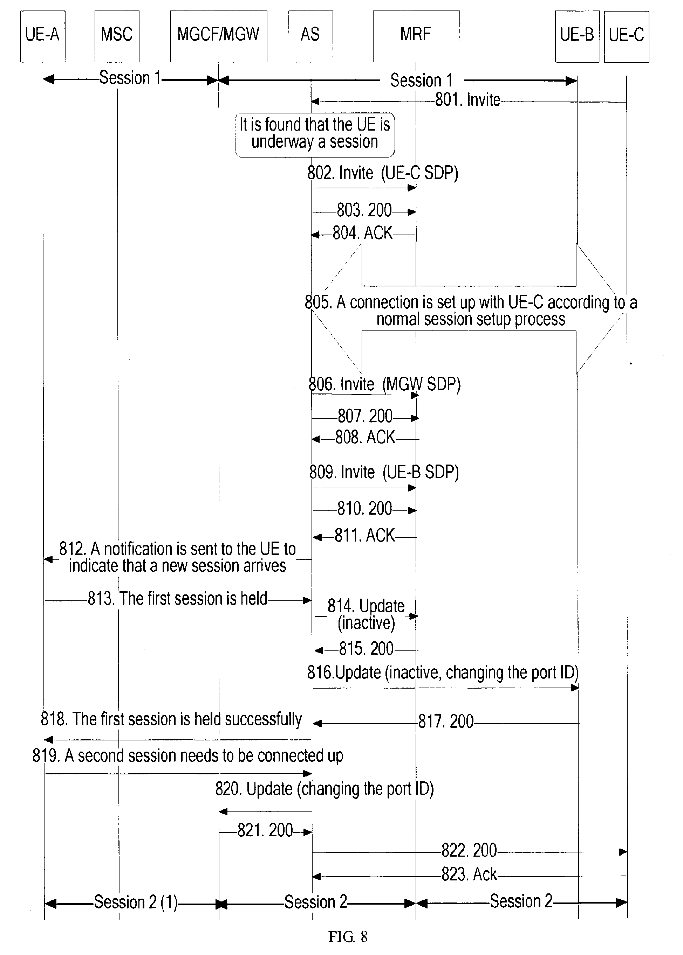

FIG. 8 is a flowchart of connecting up a second session initiated by a third UE when the first session connection is held between the first UE and the second UE at the MRF. As shown in FIG. 8, the flow includes the following steps:

Step 801: When a session (the first session) already exists between UE-A (the first UE) and UE-B (the second UE), a new call initiated from UE-C (a third UE) to UE-A is received.

Step 802-804: The AS requests a port (the third session port) from the MRF for UE-C.

Step 805: According to the normal session setup process, UE-C is connected with the third session port requested for UE-C.

Steps 806-808: A new port (the first session port) is requested from MRF for the first session. Specifically, an Invite message carries the information about the port which is located at the MGW and for use in the first session, the port at the MGW is notified to the MRF, and the first port ID requested from the MRF is carried to the AS. Here the first UE performs the first session through the MGW.

Steps 809-811: A new port (the second session port) is requested from MRF for the first session. Specifically, the Invite message carries the information about the UE-B port for use in the first session, the UE-B port is notified to the MRF, and the second session port ID requested from the MRF is carried to the AS.

Step 812: A notification is sent to UE-A, indicating that a new call arrives and a second session needs to be set up.

Step 813: UE-A sends a command of holding the first session.

Steps 814-815: The AS changes the second session port corresponding to UE-B at the MRF to be inactive, thus holding the port at UE-B.

Step 816-817: The AS changes the port at UE-B to be inactive, changes the corresponding port ID to be the second session port ID requested from the MRF, thus holding the second session port requested from the MRF for UE-B and connecting UE-B with the port requested for UE-B.

Step 818: A notification is sent to UE-A to indicate that the HOLD operation is completed.

Step 819: UE-A sends a command of connecting up the second session.

Step 820-821: The corresponding port ID in the MGW is changed to the first session port ID requested from the MRF for the MGW, thus connecting the MGW with the first session port requested from the MRF for the MGW. If the AS does not request the foregoing port from the audio mixing resources, the AS still needs to instruct the MRF to connect the port requested for the MGW with the port requested for UE-C.

Step 822-823: A 200 command is returned to UE-C to connect up the session.

In practice, steps 802-804, steps 806-808, and steps 809-811 for requesting session ports may occur concurrently or in any order. Besides, requesting a session port for the MGW and requesting a session port for UE-B may occur after a notification is sent to the first UE to indicate arrival of a new session call. In this way, it is practicable to decide whether a session port needs to be requested according to the message returned by the first UE. If the first UE rejects new sessions, no session port needs to be requested for the MGW or UE-B.

### Embodiment 2

This embodiment describes a scenario in which the first UE holds the first session and initiates a second session to the third UE to set up a call, and the session connection converges at the MRF.

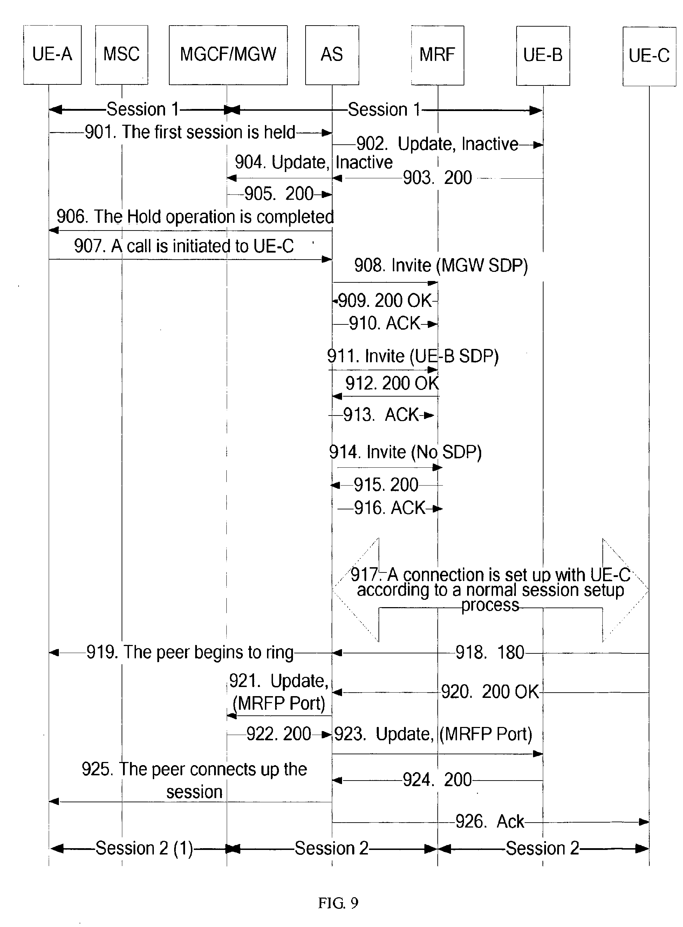

FIG. 9 is a flowchart of connecting up a second session initiated to a third UE when the first session connection is held between the first UE and the second UE at the MRF. As shown in FIG. 9, the flow includes the following steps:

Step 901: UE-A (the first UE) sends a command of holding the first session.

Steps 902-903: The AS changes the port of UE-B (the second UE) to be inactive, thus holding the port at UE-B.

Steps 904-905: The AS changes the first session port at the MGW to be inactive, thus holding the port at the MGW.

Step 906: The AS notifies UE-A that the HOLD operation is completed.

Step 907: UE-A notifies the AS that the UE is initiating a call to UE-C (the third UE).

Step 908-910: The AS requests a port from the MRF. The request carries the information about the port of the MGW in the first session, thus notifying the MRF of the port ID of the MGW and requesting the first session port from the MRF.

Steps 911-913: The AS requests a port (the second session port) from the MRF for UE-B. Specifically, the request carries the information about the port of UE-B, thus notifying the MRF the port ID of UE-B.

Steps 914-916: The AS requests a port ID (the third session port) from the MRF for UE-C. If the AS does not request the foregoing port from the audio mixing resources, the AS still needs to instruct the MRF to connect the port requested for the MGW with the port requested for UE-C.

Step 917: The AS initiates a call to UE-C by using the third session port ID requested for UE-C, and connects UE-C with the third session port requested for UE-C.

Steps 918-919: UE-C returns a ring message.

Step 920: UE-C returns a 200 command to connect up the second session.

Steps 921-922: Through an Update message, the AS notifies the MGW of the first session port ID of the MRF, thus connecting the MGW with the first session port requested for the MGW

Steps 923-924: Through an Update message, the AS notifies UE-B of the second session port ID of the MRF, thus connecting UE-B with the second session port requested for UE-B.

Steps 925-926: The AS notifies UE-A and UE-C to connect up the first session and the second session respectively, and returns an ACK command to UE-C.

In practice, steps 908-910, steps 911-913, and steps 914-916 for requesting session ports may occur concurrently or in any order.

### Embodiment 3

This embodiment describes a scenario in which the third UE initiates a second session to the first UE to set up a call, the UE connects up the second session, and the session connection converges at the MGW.

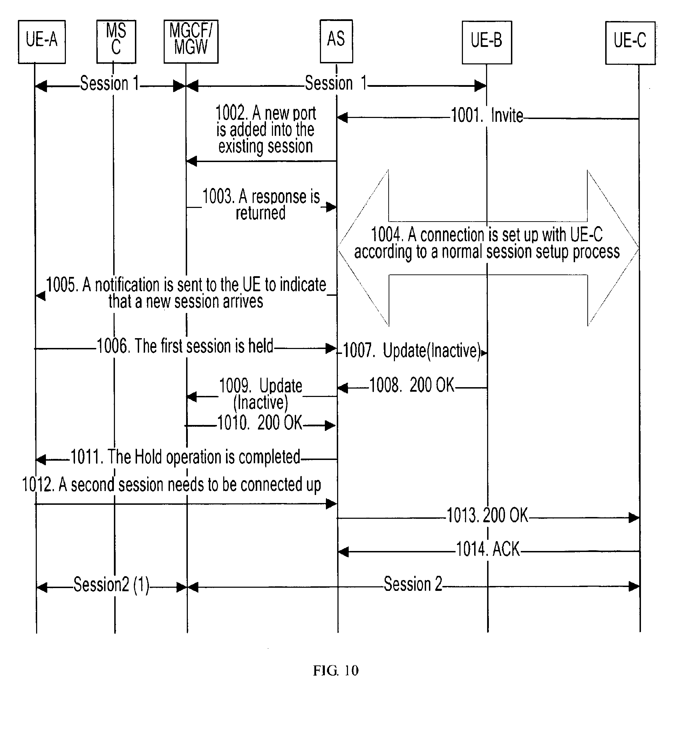

FIG. 10 is a flowchart of connecting up a second session initiated to a third UE at the MGW when the first session connection is held between the first UE and the second UE. As shown in FIG. 10, the flow includes the following steps:

Step 1001: When a session already exists between UE-A and UE-B, UE-C initiates a second session connection call to UE-A. The AS detects that a session already exists at UE-A.

Steps 1002-1003: The AS adds a port (a third session port) on the existing session, and requests to mix audio for the new port and the subsequent session through an extended Update message or Reinvite message.

Step 1004: The AS negotiates with UE-C by using the newly requested third session port ID, and connects UE-C with the third session port requested from the MGW for UE-C,

Step 1005: A notification is sent to UE-A to indicate that a new session (a second session) arrives.

Step 1006: UE-A sends a command of holding the first session.

Steps 1007-1008: The AS changes the second session port at UE-B to be inactive, thus holding the port at UE-B.

Steps 1009-1010: The AS changes the first session port at the MGW to be inactive, thus holding the UE-A port at the MGW.

Step 1011: The AS notifies UE-A that the HOLD operation is completed.

Step 1012: UE-A connects up the second session. If the AS does not request to mix audio for the new port and the first session, the AS needs to instruct the MGCF to connect the CS-side port of the first session with the newly requested port.

Step 1013-1014: A 200 command is returned to UE-C to connect up the session.

### Embodiment 4

This embodiment describes a scenario in which the first UE initiates a second session to the third UE to set up a call after the first UE holds the first session, the UE connects up the second session, and the session connection converges at the MGW.

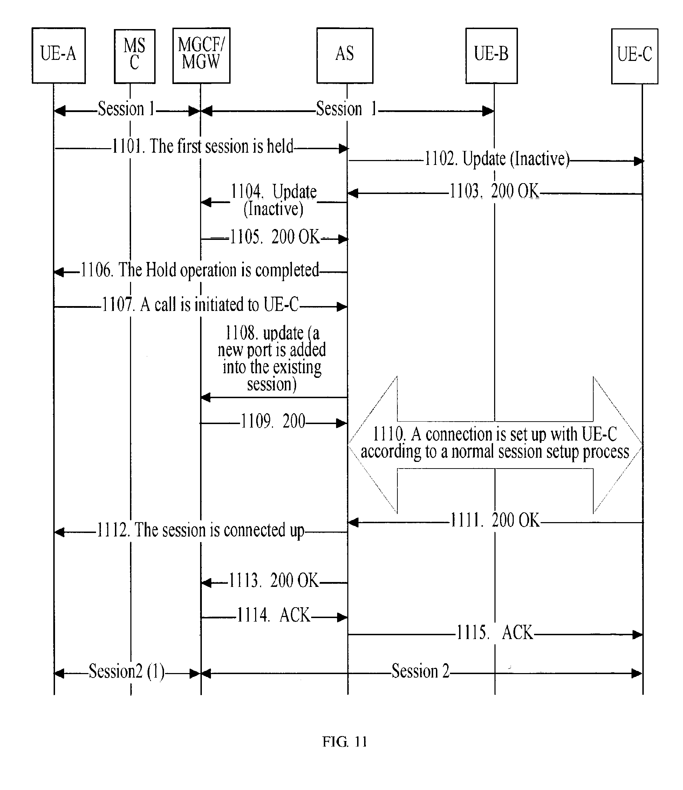

FIG. 11 is a flowchart of initiating a second session to a third UE to set up a call after the first UE holds the first session at the MGW. As shown in FIG. 11, the flow includes the following steps:

Step 1101: UE-A (the first UE) sends a command of holding the first session.

Steps 1102-1103: The AS changes the port of UE-B (the second UE) to be inactive, thus holding the second session port at UE-B.

Steps 1104-1105: The AS changes the first session port at the MGW to be inactive, thus holding the first session port at the MGW

Step 1106: The AS notifies UE-A that the HOLD operation is completed.

Step 1107: UE-A notifies the AS that the UE is initiating a call to UE-C (the third UE).

Steps 1108-1109: A third session port is requested for UE-C in the existing session. Audio is mixed for the newly requested third session port and the existing first session. The request may be sent through an extended Update message or Reinvite message.

Step 1110: The AS initiates a call to UE-C by using the requested third session port, and connects UE-C with the third session port which is located at the MGW and requested for UE-C.

Step 1111-1115: The AS connects up the second session between UE-A and UE-C. If the AS does not request to mix audio for the third session port and the first session, the AS needs to instruct the MGCF to connect the CS-side port of the first session with the third session port.

### Embodiment 5

This embodiment describes how to execute an ECT operation instruction for the third session connection between the second UE and the third UE at the MRF when a session is held between the first UE and the second UE.

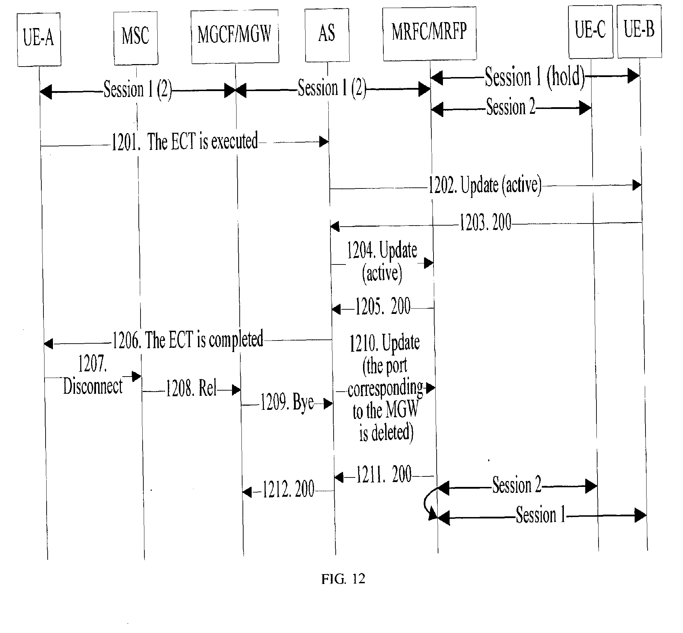

FIG. 12 shows a process of the first UE executing an ECT operation instruction at the MRF when the first session connection is held between the first UE and the second UE. As shown in FIG. 12, the process includes the following steps:

Step 1201: UE-A (the first UE) sets up the first session and the second session with UE-B (the second UE) and UE-C (the third UE) respectively, and the first session between UE-A and UE-B is held. In this case, UE-A notifies the AS to perform an ECT service.

Steps 1202-1205: The AS activates the held first session. If the port requested by the AS is not an audio mixing resource port, the AS needs to notify the MRF to connect the port requested for UE-C with the port requested for UE-B before notifying the UE that the ECT is completed. In this way, UE-B is connected with UE-C.

Step 1206: The AS notifies UE-A that the ECT operation is completed.

Steps 1207-1209: UE-A sends a command of releasing the first session and the second session, and the AS intercepts the command.

Steps 1210-1212: The AS deletes the first session port ID corresponding to the MGW in the MRF. At this time, UE-A is disconnected from UE-B and UE-C, the first session is active, and the connection between the second session port and the third session port is held. In this way, the session between the second UE and the third UE is connected.

### Embodiment 6

This embodiment describes how to execute an operation instruction of MPTY between the first UE, the second UE, and the third UE at the MRF when a session is held between the first UE and the second UE.

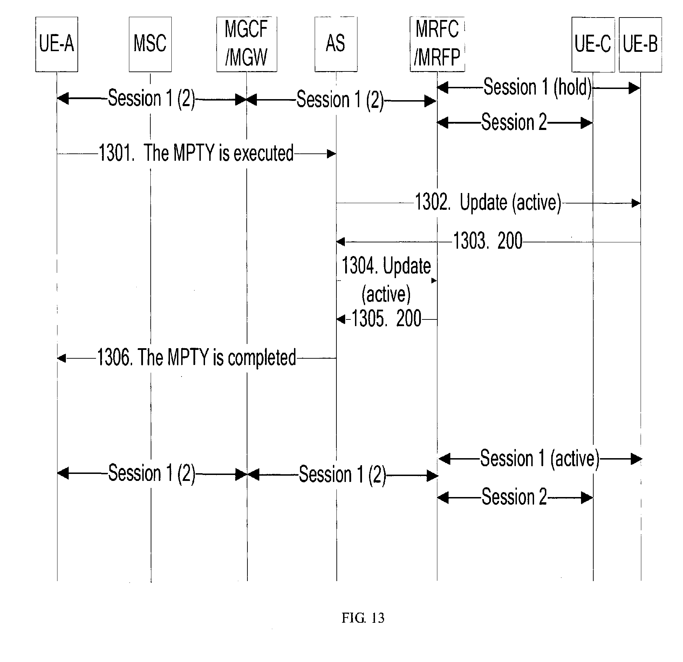

FIG. 13 shows a process of executing an operation instruction of MPTY between the first UE, the second UE and the third UE at the MRF. As shown in FIG. 13, the process includes the following steps:

Step 1301: UE-A (the first UE) sets up the first session and the second session with UE-B (the second UE) and UE-C (the third UE) respectively, and the first session between UE-A and UE-B is held. In this case, UE-A notifies the AS to perform an MPTY service.

Steps 1302-1305: The AS activates the held first session, thus connecting the MPTY service session between UE-B, UE-C, and UE-A.

Step 1306: The AS notifies UE-A that the MPTY operation is completed.

In this embodiment, the MPTY service requires that the port requested by the AS is an audio mixing resource port. This embodiment supposes that the MPTY service is implemented between only three parties. In practice, the MPTY service may be connected between more parties based on the function of audio mixing site resources of the foregoing method.

### Embodiment 7

This embodiment describes how to execute an ECT operation instruction for the third session connection between the second UE and the third UE at the MGW by using an audio fixing function when a session is held between the first UE and the second UE.

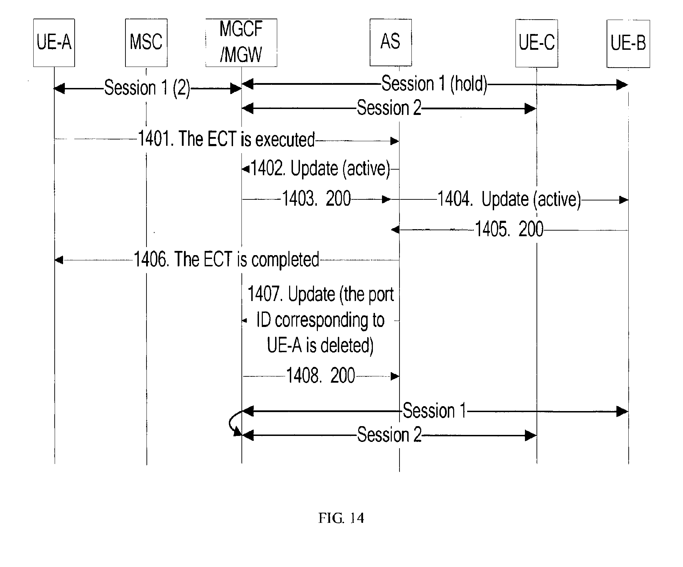

FIG. 14 shows a process of executing an operation instruction of ECT between the first UE, the second UE and the third UE at the MGW by using an audio mixing function. As shown in FIG. 14, the process includes the following steps:

Step 1401: UE-A (the first UE) sets up the first session and the second session with UE-B (the second UE) and UE-C (the third UE) respectively, and the first session between UE-A and UE-B is held. In this case, UE-A notifies the AS to perform an ECT service.

Steps 1402-1405: The AS activates the held first session. If the AS does not mix audio for the third session port of UE-C and the existing session, the AS needs to notify the MGCF to connect the port requested for UE-C with the port requested for UE-B before notifying the UE that the ECT is completed. In this way, UE-B is connected with UE-C.

Step 1406: The AS notifies UE-A that the ECT operation is completed.

Steps 1407-1408: The port ID corresponding to UE-A in the MGW is deleted.

### Embodiment 8

This embodiment describes how to execute an operation instruction of MPTY between the first UE, the second UE, and the third UE at the MGW when a session is held between the first UE and the second UE.

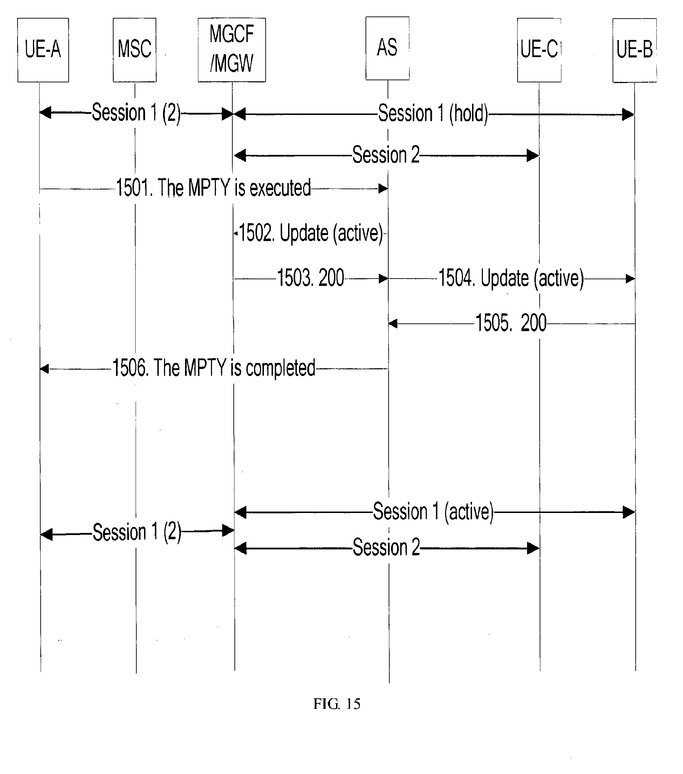

FIG. 15 shows a process of executing an operation instruction of MPTY between the first UE, the second UE, and the third UE at the MGW. As shown in FIG. 15, the process includes the following steps:

Step 1501: UE-A (the first UE) sets up sessions with UE-B (the second UE) and UE-C (the third UE) respectively, and the first session between UE-A and UE-B is held. In this case, UE-A notifies the AS to perform an MPTY service.

Steps 1502-1505: The AS activates the held first session, thus connecting UE-C with UE-B. In this way, UE-B, UE-C and UE-A are connected.

Step 1506: The AS notifies UE-A that the MPTY operation is completed.

In this embodiment, the service requires that the AS already implements audio mixing for the session port and the existing session. This embodiment supposes that three parties are connected. In practice, the foregoing method also works to connect more parties.

### Embodiment 9

This embodiment describes how to implement an MPTY service between the first UE, the second UE, and the third UE by using conference resources.

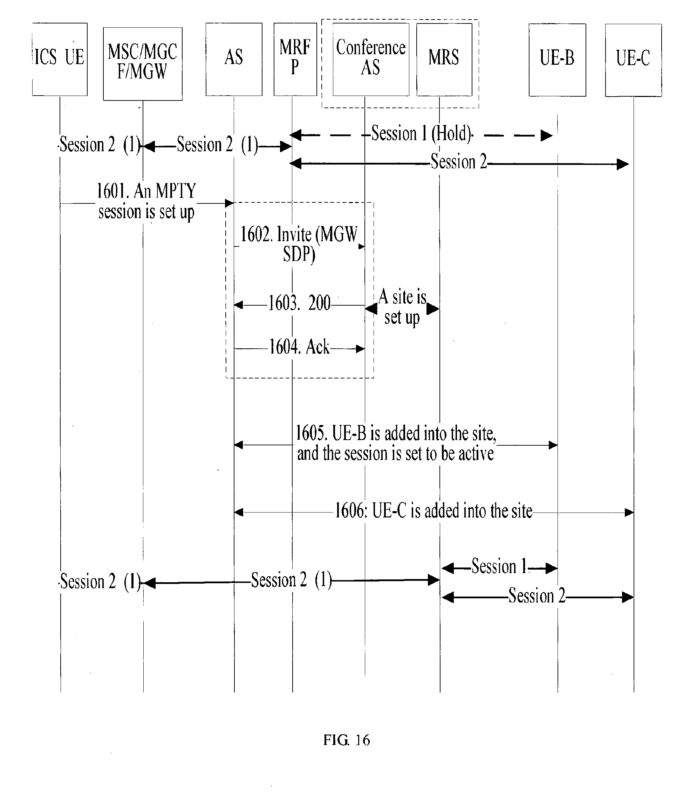

FIG. 16 shows a process of executing an operation instruction of MPTY between the first UE, the second UE, and the third UE by using conference resources. As shown in FIG. 16, the process includes the following steps:

The 1601: The user sends a command of setting up an MPTY session.

Steps 1602-1604: The AS finds that the UE needs to set up an MPTY session, and therefore, requests conference resources from the Conference AS to set up a site.

Step 1605: UE-B is added into the site, and the session is activated.

Step 1606: UE-C is added into the site.

This embodiment supposes that two existing sessions are connected on a Media Resource Function Processor (MRFP). In practice, if one of the two existing sessions is connected on the MRFP and the other is connected on the MGW, or if both of the two existing sessions are connected on the MGW, the implementation mode is the same.

This embodiment supposes that the AS adds UE-B and UE-C into the site. In practice, it is also practicable that after setting up the MPTY session, the first UE sends a command to the AS to trigger the AS to add the UE specified by the first UE into the site.

### Embodiment 10

This embodiment describes how to perform ECT, where: one of two existing sessions is connected on the MRF, and the other is connected on the MGW, and a fourth session port is allocated and the fourth session port has the same resource as that of the third session port. In this embodiment, the session port is allocated on the MRF, and then second UE is connected with the fourth session port. After the first UE or the first session port is disconnected, the third session port is connected with the fourth session port to perform the third session between the second UE and the third UE.

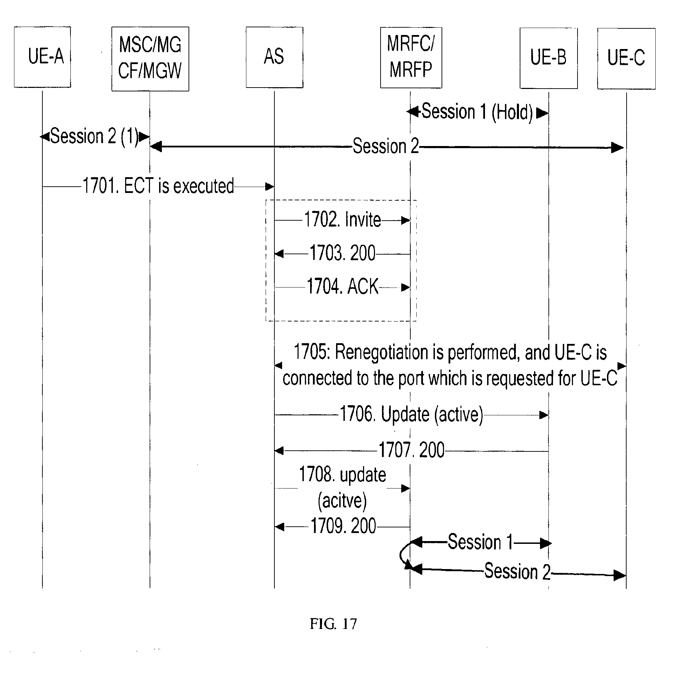

FIG. 17 shows a process of executing an operation instruction of ECT between the first UE, the second UE, and the third UE. As shown in FIG. 17, the process includes the following steps:

The 1701: The user sends a command of executing ECT.

Steps 1702-1704: The AS finds that the UE needs to execute ECT, and therefore, requests a port from the MRF for UE-C.

Step 1705: UE-C is connected to the port which is requested from the MRF for UE-C.

Steps 1706-1709: The connection between UE-B and MRF is activated.

In this embodiment, if the port connected to UE-B at the MRF in FIG. 17 and the port connected to UE-C at the MRF are on different audio mixing resources, the AS needs only to connect the two ports to implement the ECT.

### Embodiment 11

This embodiment describes how to execute CW by setting the local IP address to 0.0.0.0.

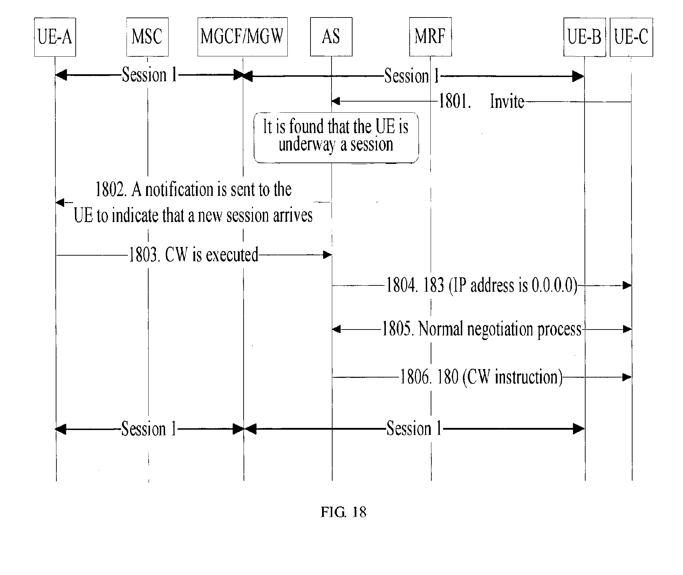

FIG. 18 shows a process of executing an operation instruction of CW between the first UE, the second UE, and the third UE. As shown in FIG. 18, the process includes the following steps:

Step 1801: The AS receives a session directed to a UE.

Step 1802: The AS notifies the UE that a new session arrives.

Step 1803: The UE needs to execute CW.

Step 1804: The AS sets the local IP address to 0.0.0.0 in the 183 response returned to UE-C.

Step 1805: Normal session negotiation is performed between the AS and UE-C.

Step 1806: The AS returns a CW ID in a 180 message.

### Embodiment 12

This embodiment describes how to execute CW by connecting a CW session to an MRF.

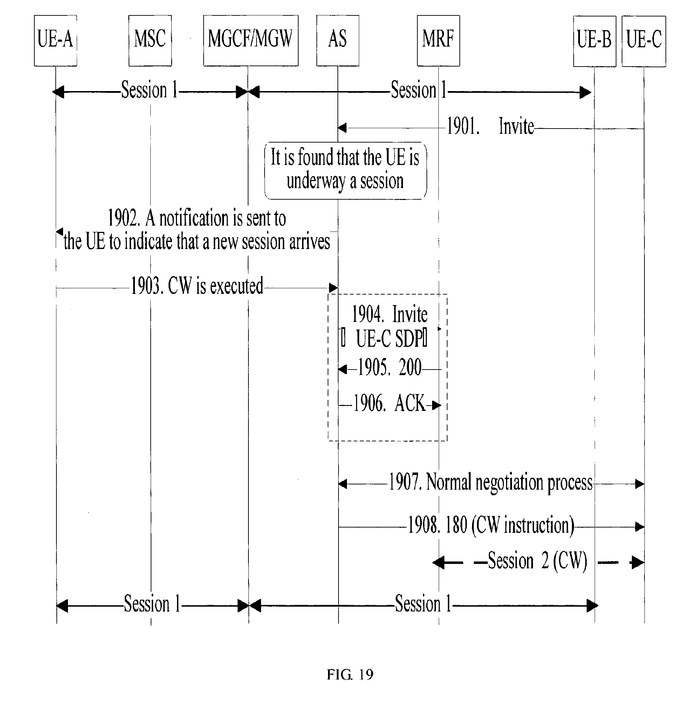

FIG. 19 is a flowchart of executing CW by connecting a session to an MRF. As shown in FIG. 19, the flow includes the following steps:

Step 1901: The AS receives a session directed to a UE.

Step 1902: The AS notifies the UE that a new session arrives.

Step 1903: The UE needs to execute CW.

Steps 1904-1906: The AS requests a new port from the MRF, notifies the MRF of the port ID of UE-C, and obtains the information about the port at the MRF.

Step 1907: Normal session negotiation is performed between the AS and UE-C.

Step 1908: The AS returns a session CW ID in a 180 message.

### Embodiment 13

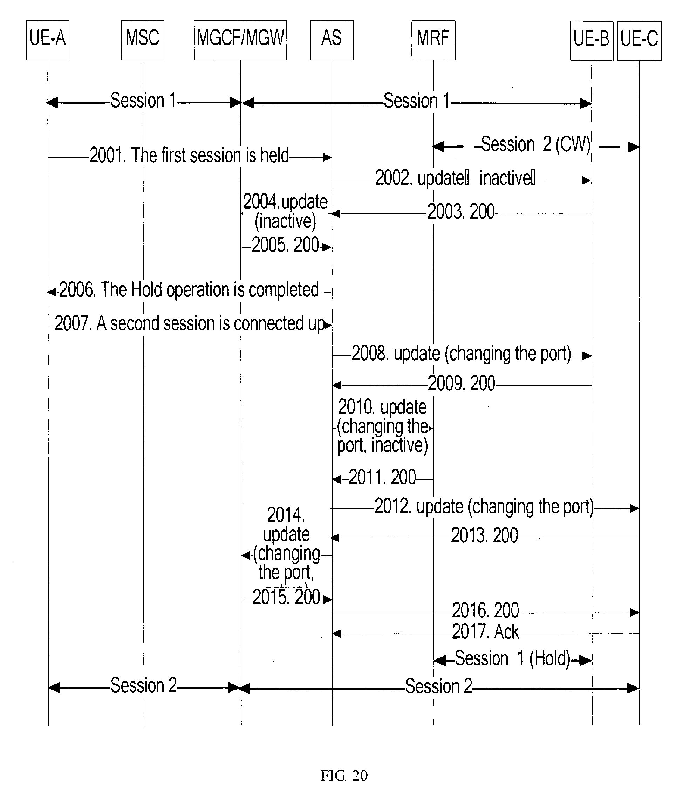

FIG. 20 is a flowchart of connecting up a second session when the second session undergoes CW. Since embodiment 11 describes how to execute CW of a session but does not describe how to connect up the second session when the second session undergoes CW, embodiment 13 describes how to connect up the session which undergoes CW.

FIG. 20 is a flowchart of connecting up the second session which undergoes CW. As shown in FIG. 20, the flow includes the following steps:

Steps 2001-2006: The UE sends a command of holding the first session, and the AS holds the first session according to the command.

Step 2007: The UE sends a command of connecting up the second session.

Steps 2008-2009: The AS notifies UE-B of the port at the MRF.

Steps 2010-2011: The AS notifies the MRF of the port ID of UE-B, and changes the port at the MRF to be inactive.

Steps 2012-2013: The AS notifies UE-C of the port ID of the MGW

Steps 2014-2011: The AS notifies the MGW of the port ID of UE-C, and sets the port of the MGW to be active.

Steps 2016-2017: The CW session is connected up.

If there are both a command of holding the first session and a command of connecting up the second session in the first step above, the foregoing steps 2004-2005 are omissible, and the operations in steps 2014-2015 are only modification of the port ID.

### Embodiment 14

This embodiment describes how to execute an operation instruction of alternating a HOLD operation with an activation operation between the first UE, the second UE and the third UE.

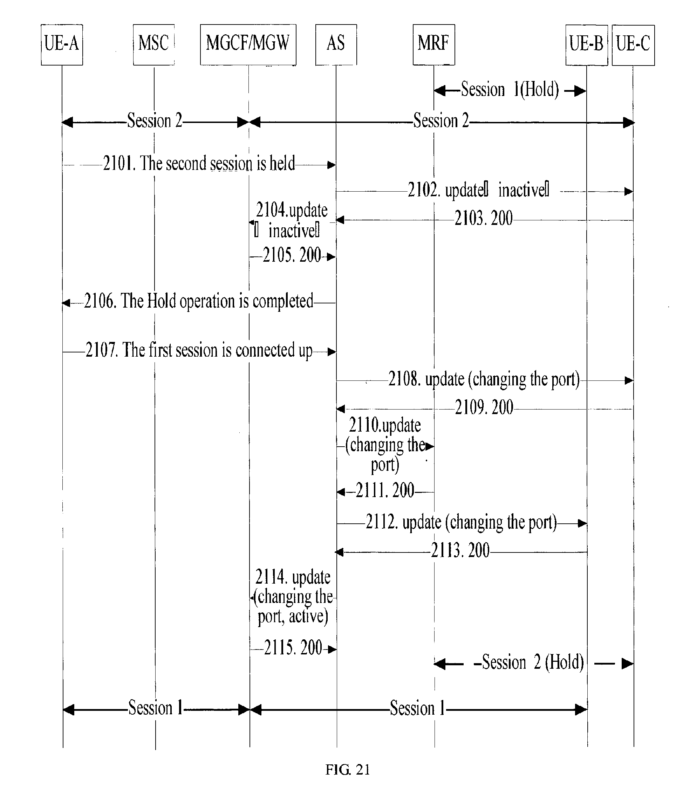

FIG. 21 shows a process of executing an operation instruction of alternating a Hold operation with an activation operation between the first UE, the second UE, and the third UE. As shown in FIG. 21, the flow includes the following steps:

Steps 2101-2106: The UE sends a command of holding the second session, and the AS holds the second session according to the command.

Step 2107: The UE sends a command of connecting up the first session.

Steps 2108-2109: The AS notifies UE-C of the port at the MRF.

Steps 2110-2111: The AS notifies the MRF of the port ID of UE-C.

Steps 2112-2113: The AS notifies UE-B of the port ID of the MGW.

Steps 2114-2115: The AS notifies the MGW of the port ID of UE-B, and sets the port of the MGW to be active.

If there are both a command of holding the second session and a command of connecting up the first session in the first step above, the foregoing steps 2104-2105 are omissible, and the operations in steps 2114-2115 are only modification of the port ID.

### Embodiment 15

This embodiment describes a call termination process of a first UE in which the UE needs to connect up a second session. In this embodiment, the UE needs to connect up the second session, and connects the second UE to the MRF and connects the third UE to the MGW.

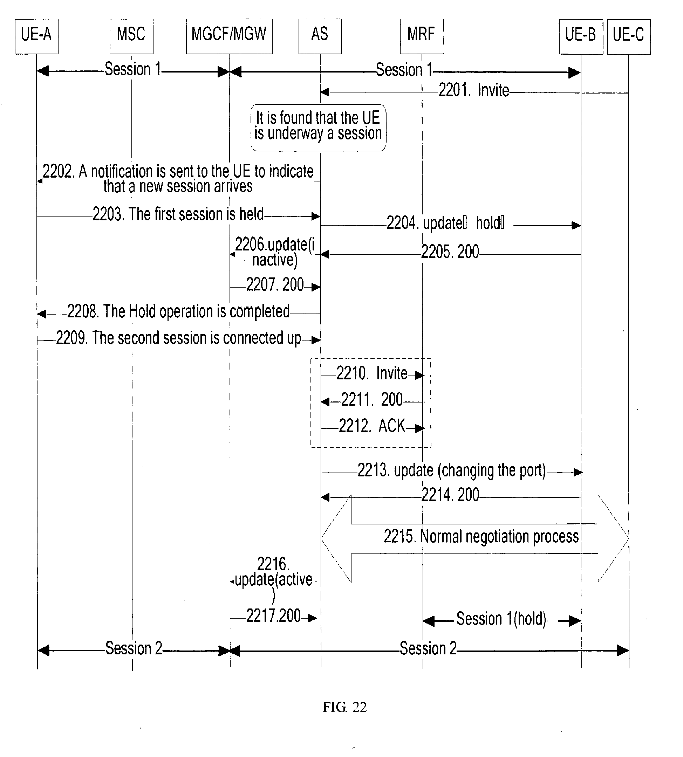

FIG. 22 illustrates a call termination process of a first UE in which the first UE needs to connect up a second session. As shown in FIG. 22, the process includes the following steps:

Step 2201: The AS receives a call directed to a UE.

Step 2202: The AS notifies the UE that a new call arrives.

Steps 2203-2208: The UE holds the first session.

Step 2209: The UE sends a command of connecting up the second session to the AS.

Steps 2210-2212: The AS requests a port from the MRF for UE-B, notifies the MRF of the port ID of UE-B, and obtains the port ID of the MRF.

Steps 2213-2214: The AS notifies UE-B of the port requested from the MRF.

Step 2215: The MGW is connected with UE-C according to a normal session negotiation process.

Steps 2216-2217: The AS sets the port ID at the MGW to be active.

In practice, if there are both a command of holding the first session and a command of connecting up the second session in step 2203, steps 2206-2207 and steps 2216-2217 are omissible.

Meanwhile, steps 2216-2217 may be performed at any time after step 2209.

The foregoing embodiments reveal how to provide multi-session services under centralized control of the IMS by using network media resources. Therefore, when a UE accesses the network from a CS domain, services can still be provided for the UE in the IMS domain, thus implementing centralized control for services, reducing deployment and management costs for the service provider, providing consistent service experience for users, and improving the utilization ratio of CS domain resources.

It is understandable to those skilled in the art that all or part of the steps of the foregoing embodiments may be implemented by hardware instructed by a computer program. The program may be stored in a computer-readable storage medium. Once being executed, the program performs the processes covered in the foregoing embodiments. The storage medium may be a magnetic disk, compact disk, Read-Only Memory (ROM), or Random Access Memory (RAM).

It is apparent that those skilled in the art can make modifications and variations to the present invention without departing from the scope of the present invention. The present invention is intended to cover the modifications and variations provided that they fall in the scope of protection defined by the following claims or their equivalents.

## Claims

1. A method for providing multi-session services for users, wherein: a first User Equipment, UE, which accesses a network from a Circuit-Switched, CS, domain sets up a first session with a second UE through a first bearer channel, a first session port, and a second session port; the first bearer channel is allocated to the first UE for use between the CS domain and an Internet Protocol Multimedia Subsystem, IMS, domain in the first session; the first session port is allocated to the first bearer channel for use in the IMS domain; and the second session port is allocated to the second UE for use in the IMS domain in the first session; **characterized in that,** the method comprises:
(401) sending a session setup request from a third UE to the first UE or from the first UE to the third UE to set up a second session;
(402) holding a first session connection, and allocating a third session port in the IMS domain; and
(403) connecting bearer channels of the first UE, the second UE, and the third UE through the first bearer channel, the first session port, the second session port, and the third session port according to an operation instruction selected by the first UE.

2. The method of claim 1, further comprising:
deciding to set up the second session through a connection between the session port and the bearer channel according to the operation instruction selected by the first UE.

3. The method of claim 2, wherein:
if the operation instruction selected by the first UE is to connect up the second session, the first session is held through the connection between the first bearer channel, the first session port and the second session port, and the second session is connected up through the connection between the first bearer channel, the first session port and the third session port; or, the first session is held through the connection between the third session port and the second UE, and the second session is connected up through the connection between the first bearer channel, the first session port, and the second session port; or
if the operation instruction selected by the first UE is to let the second session undergo Call Waiting, CW, the first session is held through the connection between the first bearer channel, the first session port and the second session port, and the third UE is notified to wait for a call connection.

4. The method of claim 1, further comprising:
deciding to set up a third bearer channel through the connection between the second session port and the third session port according to the operation instruction selected by the first UE, and connecting a session between the second UE and the third UE through the third bearer channel.

5. The method of claim 4, wherein:
the first UE or the first session port is disconnected, and a third session is performed between the second UE and the third UE through the connection between the second session port, the third bearer channel and the third session port; or a fourth session port which has the same resource as that of the third session port is allocated and connected with the second UE, the first UE or the first session port is disconnected, and the third session is performed between the second UE and the third UE through the connection between the third session port and the fourth session port, if the operation instruction selected by the first UE is Explicit Call Transfer, ECT; or
a session is performed between the first UE, the second UE, and the third UE through the connection between the first bearer channel, the first session port, the second session port and the third session port if the operation instruction selected by the first UE is to connect a Multi-Party Service, MPTY.

6. The method according to any one of claims 1 to 5, wherein:
the third session port is allocated on a Multimedia Resource Function, MRF; or
the third session port is allocated on a Media Gateway, MGW, through a Media Gateway Control Function, MGCF.

7. The method of claim 6, wherein:
the session port is an audio mixing resource port.

8. A system for providing multi-session services for users, comprising a first User Equipment, UE, and a second UE in a first session, wherein: the first UE which is adapted to access a network from a Circuit-Switched, CS, domain is adapted to set up the first session with the second UE through a first bearer channel, a first session port and a second session port; the first bearer channel is allocated to the first UE for use between the CS domain and an Internet Protocol Multimedia Subsystem, IMS, domain in the first session; the first session port is allocated to the first bearer channel for use in the IMS domain; and the second session port is allocated to the second UE for use in the IMS domain in the first session; **characterized in that,** the system further comprises:
a third UE, adapted to set up a second session with the first UE;
a port allocating module, adapted to allocate a third session port in the IMS domain; and
a session connecting module, adapted to connect bearer channels of the first UE, the second UE and the third UE through the first bearer channel, the first session port, the second session port, and the third session port according to an operation instruction selected by the first UE.

9. The system of claim 8, further comprising:
a first session setup module, adapted to decide to set up the second session through a connection between the session port and the bearer channel according to the operation instruction selected by the first UE.

10. The system of claim 8, further comprising:
a second session setup module, adapted to decide to set up a third bearer channel through the connection between the second session port and the third session port according to the operation instruction selected by the first UE, and perform a session between the second UE and the third UE through the third bearer channel.

11. An Application Server, AS, for providing multi-session services for users, wherein: a first User Equipment, UE, which accesses a network from a Circuit Switched, CS, domain sets up a first session with a second UE through a first bearer channel, a first session port, and a second session port when the first UE and the second UE are in the first session; the first bearer channel is allocated to the first UE for use between the CS domain and an Internet Protocol Multimedia Subsystem, IMS, domain in the first session; the first session port is allocated to the first bearer channel for use in the IMS domain; and the second session port is allocated to the second UE for use in the IMS domain in the first session; **characterized in that**, the AS comprises:
a port allocating module, adapted to allocate a third session port in the IMS domain when a session setup request is sent from a third UE to the first UE or from the first UE to the third UE to set up the second session; and
a session connecting module, adapted to connect bearer channels of the first UE, the second UE, and the third UE through the first bearer channel, the first session port, the second session port, and the third session port according to an operation instruction selected by the first UE.

12. The AS of claim 11, further comprising:
a first session setup module, adapted to decide to set up the second session through a connection between the session port and the bearer channel according to the operation instruction selected by the first UE.

13. The AS of claim 12, wherein the first session setup module comprises:
a first connecting unit, adapted to: hold the first session through the connection between the first bearer channel, the first session port and the second session port, and connect up the second session through the connection between the first bearer channel, the first session port and the second bearer channel; or hold the first session through the connection between the third session port and the second UE, and connect up the second session through the connection between the first bearer channel, the first session port and the second session port, if the operation instruction selected by the first UE is to connect up the second session; and
a second connecting unit, adapted to: hold the first session through the connection between the first bearer channel, the first session port and the second session port, and notify the third UE to wait for call connection, if the operation instruction selected by the first UE is to let the second session undergo Call Waiting, CW.

14. The AS of claim 11, further comprising:
a second session setup module, adapted to decide to set up a third bearer channel through the connection between the second session port and the third session port according to the operation instruction selected by the first UE, and perform a session between the second UE and the third UE through the third bearer channel.

15. The AS of claim 14, wherein the second session setup module comprises:
a fourth connecting unit, adapted to: disconnect the first UE or the first session port, and perform a third session between the second UE and the third UE through the connection between the second session port, the third bearer channel and the third session port; or allocate a fourth session port which has the same resource as that of the third session port and is connected with the second UE, disconnect the first UE or the first session port, and perform the third session between the second UE and the third UE through the connection between the third session port and the fourth session port, if the operation instruction selected by the first UE is Explicit Call Transfer, ECT; and
a fifth connecting unit, adapted to: perform a session between the first UE, the second UE, and the third UE through the connection between the first bearer channel, the first session port, the second session port and the third session port if the operation instruction selected by the first UE is to connect a Multi-Party Service, MPTY.

## Patentansprüche

1. Verfahren zum Bereitstellen von Mehrfachsitzungsdiensten für Benutzer, wobei ein erstes Benutzergerät UE, das von einer leitungsvermittelten bzw. CS-Domäne aus auf ein Netz zugreift, eine erste Sitzung mit einem zweiten UE durch einen ersten Trägerkanal, einen ersten Sitzungsport und einen zweiten Sitzungsport aufbaut; der erste Trägerkanal an das erste UE zur Verwendung zwischen der CS-Domäne und einer "Internet Protocol Multimedia Subsystem"- bzw. IMS-Domäne in der ersten Sitzung vergeben wird; der erste Sitzungsport an den ersten Trägerkanal zur Verwendung in der IMS-Domäne vergeben wird; und der zweite Sitzungsport an das zweite UE zur Verwendung in der IMS-Domäne in der ersten Sitzung vergeben wird; **dadurch gekennzeichnet, dass** das Verfahren Folgendes umfasst:
(401) Senden einer Sitzungsaufbauanforderung von einem dritten UE zu dem ersten UE oder von dem ersten UE zu dem dritten UE, um eine zweite Sitzung aufzubauen;
(402) Halten einer ersten Sitzungsverbindung und Vergeben eines dritten Sitzungsports in der IMS-Domäne; und
(403) Verbinden von Trägerkanälen des ersten UE, des zweiten UE und des dritten UE durch den ersten Trägerkanal, den ersten Sitzungsport, den zweiten Sitzungsport und den dritten Sitzungsport gemäß einer durch das erste UE ausgewählten Operationsanweisung.

2. Verfahren nach Anspruch 1, ferner umfassend:
Entscheiden, die zweite Sitzung durch eine Verbindung zwischen dem Sitzungsport und dem Trägerkanal aufzubauen, gemäß der durch das erste UE ausgewählten Operationsanweisung.

3. Verfahren nach Anspruch 2, wobei
wenn die durch das erste UE ausgewählte Operationsanweisung das Zusammenverbinden der zweiten Sitzung ist, die erste Sitzung durch die Verbindung zwischen dem ersten Trägerkanal, dem ersten Sitzungsport und dem zweiten Sitzungsport gehalten wird und die zweite Sitzung durch die Verbindung zwischen dem ersten Trägerkanal, dem ersten Sitzungsport und dem dritten Sitzungsport zusammenverbunden wird; oder die erste Sitzung durch die Verbindung zwischen dem dritten Sitzungsport und dem zweiten UE gehalten wird und die zweite Sitzung durch die Verbindung zwischen dem ersten Trägerkanal, dem ersten Sitzungsport und dem zweiten Sitzungsport zusammenverbunden wird; oder
wenn die durch das erste UE ausgewählte Operationsanweisung ist, die zweite Sitzung Anklopfen bzw. CW zu unterziehen, die erste Sitzung durch die Verbindung zwischen dem ersten Trägerkanal, dem ersten Sitzungsport und dem zweiten Sitzungsport gehalten wird und das dritte UE benachrichtigt wird, auf eine Anrufverbindung zu warten.

4. Verfahren nach Anspruch 1, ferner umfassend:
Entscheiden, einen dritten Trägerkanal durch die Verbindung zwischen dem zweiten Sitzungsport und dem dritten Sitzungsport aufzubauen, gemäß der durch das erste UE ausgewählten Operationsanweisung und
Verbinden einer Sitzung zwischen dem zweiten UE und dem dritten UE durch den dritten Trägerkanal.

5. Verfahren nach Anspruch 4, wobei
das erste UE oder der erste Sitzungsport getrennt wird und eine dritte Sitzung zwischen dem zweiten UE und dem dritten UE durch die Verbindung zwischen dem zweiten Sitzungsport, dem dritten Trägerkanal und dem dritten Sitzungsport durchgeführt wird; oder ein vierter Sitzungsport, der dieselbe Ressource wie die des dritten Sitzungsports aufweist, vergeben und mit dem zweiten UE verbunden wird, das erste UE oder der erste Sitzungsport getrennt wird und die dritte Sitzung zwischen dem zweiten UE und dem dritten UE durch die Verbindung zwischen dem dritten Sitzungsport und dem vierten Sitzungsport durchgeführt wird, wenn die durch das erste UE ausgewählte Operationsanweisung "Explicit Call Transfer" ECT ist; oder
eine Sitzung zwischen dem ersten UE, dem zweiten UE und dem dritten UE durch die Verbindung zwischen dem ersten Trägerkanal, dem ersten Sitzungsport, dem zweiten Sitzungsport und dem dritten Sitzungsport durchgeführt wird, wenn die durch das erste UE ausgewählte Operationsanweisung das Verbinden eines "Multi-Party-Service" MPTY ist.

6. Verfahren nach einem der Ansprüche 1 bis 5, wobei
der dritte Sitzungsport an eine "Multimedia Resource Function" MRF vergeben wird; oder
der dritte Sitzungsport durch eine "Media Gateway Control Function" MGCF an ein "Media Gateway" MGW vergeben wird.

7. Verfahren nach Anspruch 6, wobei
der Sitzungsport ein Audio-Mischressourcenport ist.

8. System zum Bereitstellen von Mehrfachsitzungsdiensten für Benutzer, das ein erstes Benutzergerät UE und ein zweites UE in einer ersten Sitzung umfasst, wobei das erste UE, das dafür ausgelegt ist, von einer leitungsvermittelten bzw. CS-Domäne aus auf ein Netz zuzugreifen, ausgelegt ist zum Aufbauen der ersten Sitzung mit dem zweiten UE durch einen ersten Trägerkanal, einen ersten Sitzungsport und einen zweiten Sitzungsport; der erste Trägerkanal an das erste UE zur Verwendung zwischen der CS-Domäne und einer "Internet Protocol Multimedia Subsystem"- bzw. IMS-Domäne in der ersten Sitzung vergeben wird; der erste Sitzungsport an den ersten Trägerkanal zur Verwendung in der IMS-Domäne vergeben wird; und der zweite Sitzungsport an das zweite UE zur Verwendung in der IMS-Domäne in der ersten Sitzung vergeben wird; **dadurch gekennzeichnet, dass** das System Folgendes umfasst:
ein drittes UE, ausgelegt zum Aufbauen einer zweiten Sitzung mit dem ersten UE;
ein Portvergabemodul, ausgelegt zum Vergeben eines dritten Sitzungsports in der IMS-Domäne; und
ein Sitzungsverbindungsmodul, ausgelegt zum Verbinden von Trägerkanälen des ersten UE, des zweiten UE und des dritten UE durch den ersten Trägerkanal, den ersten Sitzungsport, den zweiten Sitzungsport und den dritten Sitzungsport gemäß einer durch das erste UE ausgewählten Operationsanweisung.

9. System nach Anspruch 8, ferner umfassend:
ein erstes Sitzungsaufbaumodul, ausgelegt zum Entscheiden, die zweite Sitzung durch eine Verbindung zwischen dem Sitzungsport und dem Trägerkanal aufzubauen, gemäß der durch das erste UE ausgewählten Operationsanweisung.

10. System nach Anspruch 8, ferner umfassend:
ein zweites Sitzungsaufbaumodul, ausgelegt zum Entscheiden, einen dritten Trägerkanal durch die Verbindung zwischen dem zweiten Sitzungsport und dem dritten Sitzungsport gemäß der durch das erste UE ausgewählten Operationsanweisung aufzubauen und eine Sitzung zwischen dem zweiten UE und dem dritten UE durch den dritten Trägerkanal durchzuführen.

11. Anwendungsserver AS zum Bereitstellen von Mehrfachsitzungsdiensten für Benutzer, wobei ein erstes Benutzergerät UE, das von einer leitungsvermittelten bzw. CS-Domäne aus auf ein Netz zugreift, eine erste Sitzung mit einem zweiten UE durch einen ersten Trägerkanal, einen ersten Sitzungsport und einen zweiten Sitzungsport aufbaut, wenn das erste UE und das zweite UE in der ersten Sitzung sind; der erste Trägerkanal an das erste UE zur Verwendung zwischen der CS-Domäne und einer "Internet Protocol Multimedia Subsystem"- bzw. IMS-Domäne in der ersten Sitzung vergeben wird; der erste Sitzungsport an den ersten Trägerkanal zur Verwendung in der IMS-Domäne vergeben wird; und der zweite Sitzungsport an das zweite UE zur Verwendung in der IMS-Domäne in der ersten Sitzung vergeben wird; **dadurch gekennzeichnet, dass** der AS Folgendes umfasst:
ein Portvergabemodul, ausgelegt zum Vergeben eines dritten Sitzungsports in der IMS-Domäne, wenn eine Sitzungsaufbauanforderung von einem dritten UE zu dem ersten UE oder von dem ersten UE zu dem dritten UE gesendet wird, um die zweite Sitzung aufzubauen; und
ein Sitzungsverbindungsmodul, ausgelegt zum Verbinden von Trägerkanälen des ersten UE, des zweiten UE und des dritten UE durch den ersten Trägerkanal, den ersten Sitzungsport, den zweiten Sitzungsport und den dritten Sitzungsport gemäß einer durch das erste UE ausgewählten Operationsanweisung.

12. AS nach Anspruch 11, ferner umfassend:
ein erstes Sitzungsaufbaumodul, ausgelegt zum Entscheiden, die zweite Sitzung durch eine Verbindung zwischen dem Sitzungsport und dem Trägerkanal aufzubauen, gemäß der durch das erste UE ausgewählten Operationsanweisung.

13. AS nach Anspruch 12, wobei das erste Sitzungsaufbaumodul Folgendes umfasst:
eine erste Verbindungseinheit, ausgelegt zum Halten der ersten Sitzung durch die Verbindung zwischen dem ersten Trägerkanal, dem ersten Sitzungsport und dem zweiten Sitzungsport und Zusammenverbinden der zweiten Sitzung durch die Verbindung zwischen dem ersten Trägerkanal, dem ersten Sitzungsport und dem zweiten Trägerkanal; oder Halten der ersten Sitzung durch die Verbindung zwischen dem dritten Sitzungsport und dem zweiten UE und Zusammenverbinden der zweiten Sitzung durch die Verbindung zwischen dem ersten Trägerkanal, dem ersten Sitzungsport und dem zweiten Sitzungsport, wenn die durch das erste UE ausgewählte Operationsanweisung das Zusammenverbinden der zweiten Sitzung ist; und
eine zweite Verbindungseinheit, ausgelegt zum Halten der ersten Sitzung durch die Verbindung zwischen dem ersten Trägerkanal, dem ersten Sitzungsport und dem zweiten Sitzungsport und Benachrichtigen des dritten UE, auf Anrufverbindung zu warten, wenn die durch das erste UE ausgewählte Operationsanweisung ist, die zweite Sitzung Anklopfen bzw. CW zu unterziehen.

14. AS nach Anspruch 11, ferner umfassend:
ein zweites Sitzungsaufbaumodul, ausgelegt zum Entscheiden, einen dritten Trägerkanal durch die Verbindung zwischen dem zweiten Sitzungsport und dem dritten Sitzungsport aufzubauen, gemäß der durch das erste UE ausgewählten Operationsanweisung und Durchführen einer Sitzung zwischen dem zweiten UE und dem dritten UE durch den dritten Trägerkanal.

15. AS nach Anspruch 14, wobei das zweite Sitzungsaufbaumodul Folgendes umfasst:
eine vierte Verbindungseinheit, ausgelegt zum Trennen des ersten UE oder des ersten Sitzungsports und Durchführen einer dritten Sitzung zwischen dem zweiten UE und dem dritten UE durch die Verbindung zwischen dem zweiten Sitzungsport, dem dritten Trägerkanal und dem dritten Sitzungsport; oder Vergeben eines vierten Sitzungsports, der dieselbe Ressource wie die des dritten Sitzungsports aufweist und mit dem zweiten UE verbunden ist, Trennen des ersten UE oder des ersten Sitzungsports und Durchführen der dritten Sitzung zwischen dem zweiten UE und dem dritten UE durch die Verbindung zwischen dem dritten Sitzungsport und dem vierten Sitzungsport, wenn die durch das erste UE ausgewählte Operationsanweisung "Explicit Call Transfer" ECT ist; und
eine fünfte Verbindungseinheit, ausgelegt zum Durchführen einer Sitzung zwischen dem ersten UE, dem zweiten UE und dem dritten UE durch die Verbindung zwischen dem ersten Trägerkanal, dem ersten Sitzungsport, dem zweiten Sitzungsport und dem dritten Sitzungsport, wenn die durch das erste UE ausgewählte Operationsanweisung das Verbinden eines "Multi-Party Service" MPTY ist.

## Revendications

1. Procédé de fourniture de services multisessions à des utilisateurs, dans lequel: un premier Equipement Utilisateur, UE (User Equipment), qui accède à un réseau depuis un domaine à Commutation de Circuits, CS (Circuit-Switched), établit une première session avec un deuxième UE par l'intermédiaire d'un premier canal de support, d'un premier port de session et d'un deuxième port de session ; le premier canal de support est alloué au premier UE pour une utilisation entre le domaine CS et un domaine de Sous-Système Multimédia à Protocole Internet, IMS (Internet Protocol Multimedia Subsystem), dans la première session ; le premier port de session est alloué au premier canal de support pour une utilisation dans le domaine IMS ; et le deuxième port de session est alloué au deuxième UE pour une utilisation dans le domaine IMS dans la première session ; **caractérisé en ce que** le procédé comprend :
l'envoi (401) d'une demande d'établissement de session d'un troisième UE au premier UE ou du premier UE au troisième UE pour établir une deuxième session ;
le maintien (402) d'une première connexion de session et l'allocation d'un troisième port de session dans le domaine IMS ; et
la connexion (403) de canaux de support du premier UE, du deuxième UE et du troisième UE par l'intermédiaire du premier canal de support, du premier port de session, du deuxième port de session et du troisième port de session conformément à une instruction d'exploitation sélectionnée par le premier UE.

2. Procédé selon la revendication 1, comprenant en outre :
la décision de l'établissement de la deuxième session par l'intermédiaire d'une connexion entre le port de session et le canal de support conformément à l'instruction d'exploitation sélectionnée par le premier UE.

3. Procédé selon la revendication 2, dans lequel :
si l'instruction d'exploitation sélectionnée par le premier UE consiste à connecter la deuxième session, la première session est maintenue par l'intermédiaire de la connexion entre le premier canal de support, le premier port de session et le deuxième port de session, et la deuxième session est connectée par l'intermédiaire de la connexion entre le premier canal de support, le premier port de session et le troisième port de session ; ou la première session est maintenue par l'intermédiaire de la connexion entre le troisième port de session et le deuxième UE, et la deuxième session est connectée par l'intermédiaire de la connexion entre le premier canal de support, le premier port de session et le deuxième port de session ; ou
si l'instruction d'exploitation sélectionnée par le premier UE consiste à faire en sorte que la deuxième session soit soumise à une Attente d'Appel, CW (Call Waiting), la première session est maintenue par l'intermédiaire de la connexion entre le premier canal de support, le premier port de session et le deuxième port de session, et le troisième UE reçoit une notification d'attente d'une connexion d'appel.

4. Procédé selon la revendication 1, comprenant en outre :
la décision d'établir un troisième canal de support par l'intermédiaire de la connexion entre le deuxième port de session et le troisième port de session conformément à l'instruction d'exploitation sélectionnée par le premier UE, et la connexion d'une session entre le deuxième UE et le troisième UE par l'intermédiaire du troisième canal de support.

5. Procédé selon la revendication 4, dans lequel :
le premier UE ou le premier port de session est déconnecté, et une troisième session est réalisée entre le deuxième UE et le troisième UE par l'intermédiaire de la connexion entre le deuxième port de session, le troisième canal de support et le troisième port de session ;
ou un quatrième port de session qui dispose de la même ressource que celle du troisième port de session est alloué et est connecté au deuxième UE, le premier UE ou le premier port de session est déconnecté, et la troisième session est réalisée entre le deuxième UE et le troisième UE par l'intermédiaire de la connexion entre le troisième port de session et le quatrième port de session, si l'instruction d'exploitation sélectionnée par le premier UE est un Transfert d'Appel Explicite, ECT (Explicit Call Transfer) ; ou
une session est réalisée entre le premier UE, le deuxième UE et le troisième UE par l'intermédiaire de la connexion entre le premier canal de support, le premier port de session, le deuxième port de session et le troisième port de session si l'instruction d'exploitation sélectionnée par le premier UE consiste à connecter un Service Multi-Parties, MPTY (Multi-Party).

6. Procédé selon l'une quelconque des revendications 1 à 5, dans lequel :
le troisième port de session est alloué sur une Fonction de Ressource Multimédia, MRF (Multimedia Resource Function) ; ou
le troisième port de session est alloué sur une Passerelle Multimédia, MGW (Media Gateway), par l'intermédiaire d'une Fonction de Contrôle de Passerelle Multimédia,
MGCF (Media Gateway Control Function).

7. Procédé selon la revendication 6, dans lequel :
le port de session est un port de ressource de mélange d'audio.

8. Système destiné à fournir des services multisessions à des utilisateurs, comprenant un premier Equipement Utilisateur, UE (User Equipment), et un deuxième UE dans une 2 première session, dans lequel : le premier UE, qui est apte à accéder à un réseau depuis un domaine à Commutation de Circuits, CS (Circuit-Switched), est apte à établir la première session avec le deuxième UE par l'intermédiaire d'un premier canal de support, d'un premier port de session et d'un deuxième port de session ; le premier canal de support est alloué au premier UE pour une utilisation entre le domaine CS et un domaine de Sous-Système Multimédia à Protocole Internet, IMS (Internet Protocol Multimedia Subsystem), dans la première session ; le premier port de session est alloué au premier canal de support pour une utilisation dans le domaine IMS ; et le deuxième port de session est alloué au deuxième UE pour une utilisation dans le domaine IMS dans la première session ; **caractérisé en ce que** le système comprend en outre :
un troisième UE, apte à établir une deuxième session avec le premier UE ;
un module d'allocation de port, apte à allouer un troisième port de session dans le domaine IMS ; et
un module de connexion de session, apte à connecter des canaux de support du premier UE, du deuxième UE et du troisième UE par l'intermédiaire du premier canal de support, du premier port de session, du deuxième port de session et du troisième port de session conformément à une instruction d'exploitation sélectionnée par le premier UE.

9. Système selon la revendication 8, comprenant en outre :
un premier module d'établissement de session, apte à décider d'établir la deuxième session par l'intermédiaire d'une connexion entre le port de session et le canal de support conformément à l'instruction d'exploitation sélectionnée par le premier UE.

10. Système selon la revendication 8, comprenant en outre :
un deuxième module d'établissement de session, apte à décider d'établir un troisième canal de support par l'intermédiaire de la connexion entre le deuxième port de session et le troisième port de session conformément à l'instruction d'exploitation sélectionnée par le premier UE, et à réaliser une session entre le deuxième UE et le troisième UE par l'intermédiaire du troisième canal de support.

11. Serveur d'Application, AS (Application Server), destiné à fournir des services multisessions à des utilisateurs, dans lequel : un premier Equipement Utilisateur, UE (User Equipment), qui accède à un réseau depuis un domaine à Commutation de Circuits, CS (Circuit-Switched), établit une première session avec un deuxième UE par l'intermédiaire d'un premier canal de support, d'un premier port de session et d'un deuxième port de session lorsque le premier UE et le deuxième UE sont dans la première session ; le premier canal de support est alloué au premier UE pour une utilisation entre le domaine CS et un domaine de Sous-Système Multimédia à Protocole Internet, IMS, dans la première session ; le premier port de session est alloué au premier canal de support pour une utilisation dans le domaine IMS (Internet Protocol Multimedia Subsystem); et le deuxième port de session est alloué au deuxième UE pour une utilisation dans le domaine IMS dans la première session ; **caractérisé en ce que** l'AS comprend :
un module d'allocation de port, apte à allouer un troisième port de session dans le domaine IMS lorsqu'une demande d'établissement de session est envoyée d'un troisième UE au premier UE ou du premier UE au troisième UE pour établir la deuxième session ; et
un module de connexion de session, apte à connecter des canaux de support du premier UE, du deuxième UE et du troisième UE par l'intermédiaire du premier canal de support, du premier port de session, du deuxième port de session et du troisième port de session conformément à une instruction d'exploitation sélectionnée par le premier UE.

12. AS selon la revendication 11, comprenant en outre :
un premier module d'établissement de session, apte à décider d'établir la deuxième session par l'intermédiaire d'une connexion entre le port de session et le canal de support conformément à l'instruction d'exploitation sélectionnée par le premier UE.

13. AS selon la revendication 12, dans lequel le premier module d'établissement de session comprend :
une première unité de connexion, apte à : maintenir la première session par l'intermédiaire de la connexion entre le premier canal de support, le premier port de session et le deuxième port de session, et connecter la deuxième session par l'intermédiaire de la connexion entre le premier canal de support, le premier port de session et le deuxième canal de support ; ou maintenir la première session par l'intermédiaire de la connexion entre le troisième port de session et le deuxième UE, et connecter la deuxième session par l'intermédiaire de la connexion entre le premier canal de support, le premier port de session et le deuxième port de session, si l'instruction d'exploitation sélectionnée par le premier UE consiste à connecter la deuxième session ; et
une deuxième unité de connexion, apte à : maintenir la première session par l'intermédiaire de la connexion entre le premier canal de support, le premier port de session et le deuxième port de session, et envoyer au troisième UE une notification d'attente d'une connexion d'appel, si l'instruction d'exploitation sélectionnée par le premier UE consiste à faire en sorte que la deuxième session soit soumise à une Attente d'Appel, CW (Call Waiting).

14. AS selon la revendication 11, comprenant en outre :
un deuxième module d'établissement de session, apte à décider d'établir un troisième canal de support par l'intermédiaire de la connexion entre le deuxième port de session et le troisième port de session conformément à l'instruction d'exploitation sélectionnée par le premier UE, et réaliser une session entre le deuxième UE et le troisième UE par l'intermédiaire du troisième canal de support.

15. AS selon la revendication 14, dans lequel le deuxième module d'établissement de session comprend :
une quatrième unité de connexion, apte à : déconnecter le premier UE ou le premier port de session, et réaliser une troisième session entre le deuxième UE et le troisième UE par l'intermédiaire de la connexion entre le deuxième port de session, le troisième canal de support et le troisième port de session ; ou allouer un quatrième port de session qui dispose de la même ressource que celle du troisième port de session et est connecté au deuxième UE, déconnecter le premier UE ou le premier port de session, et réaliser la troisième session entre le deuxième UE et le troisième UE par l'intermédiaire de la connexion entre le troisième port de session et le quatrième port de session, si l'instruction d'exploitation sélectionnée par le premier UE est un Transfert d'Appel Explicite, ECT (Explicit Call Transfer) ; et
une cinquième unité de connexion, apte à : réaliser une session entre le premier UE, le deuxième UE et le troisième UE par l'intermédiaire de la connexion entre le premier canal de support, le premier port de session, le deuxième port de session et le troisième port de session si l'instruction d'exploitation sélectionnée par le premier UE consiste à connecter un Service Multi-Parties, MPTY (Multi-Party).
